# EUROPEAN PATENT APPLICATION

(11) **EP 4 199 567 A1**
(43) Date of publication of application: **21.06.2023**
(21) Application number: 21860443.7
(22) Date of filing: 25.08.2021
(51) Int. Cl.: H04W 16/02

(54) **COMMUNICATION METHOD AND APPARATUS**

(30) Priority: 28.08.2020 CN 202010889093
(71) Applicant: Huawei Technologies Co., Ltd., Shenzhen, Guangdong 518129 (CN)
(72) Inventor: LI, Yunbo, Shenzhen, Guangdong 518129 (CN); GUO, Yuchen, Shenzhen, Guangdong 518129 (CN); GAN, Ming, Shenzhen, Guangdong 518129 (CN); HUANG, Guogang, Shenzhen, Guangdong 518129 (CN)
(74) Representative: Huawei European IPR
(86) International application number: PCT/CN2021/114554
(87) International publication number: WO 2022/042608

(57) **Abstract**

A communication method and apparatus are disclosed, and relate to the field of communication technologies. One type of radio frame is provided to meet different use requirements for a time resource in a plurality of application scenarios, so that the radio frame is universal. The communication method includes: A first device generates a first frame. The first frame includes a first field and a second field. The first field indicates a duration of a first time resource. The second field indicates a purpose of the first time resource. The purpose of the first time resource includes: The first time resource is used to transmit a single-user PPDU, or the first time resource is used to perform frame exchange. The first device sends the first frame to a second device.

## Description

This application claims priority to Chinese Patent Application No. 202010889093.3, filed with the China National Intellectual Property Administration on August 28, 2020 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

To meet a specific requirement of a user, the Institute of Electrical and Electronics Engineers (institute of electrical and electronic engineers, IEEE) 802.11be standard may support some special application scenarios, for example, a scheduled (Scheduled) peer-to-peer (Peer-to-Peer, P2P) scenario and a coordinated time division multiple access (coordinated time division multiple access, CO-TDMA) scenario.

In a scheduled P2P scenario, a plurality of stations (stations, STAs) are connected by using a P2P technology to form a small network, so that the plurality of STAs can directly communicate with each other. An access point (access point) AP may allocate a time resource to a STA, so that the STA communicates with another STA on the allocated time resource.

In a CO-TDMA scenario, two AP roles are defined: a sharing (sharing) AP and a shared (shared) AP. After obtaining a TXOP, the sharing AP may allocate a part of time resources in the TXOP to the shared AP, so that the shared AP communicates, on the time resource, with a station associated with the shared AP.

It can be learned that there are different use requirements for a time resource in a plurality of application scenarios in a current communication system. However, for different application scenarios, if radio frames of different frame types are used to meet the use requirements for the time resource, a plurality of types of frame type indication information are introduced, resulting in a complex communication protocol. Therefore, how to use one type of radio frame to meet different use requirements for the time resource in the plurality of application scenarios, so that the radio frame is universal is a technical problem to be urgently resolved.

### SUMMARY

This application provides a communication method, to meet different use requirements for a time resource in a plurality of application scenarios by using one type of radio frame, so that the radio frame is universal.

According to a first aspect, a communication method is provided. The method includes: A first device generates a first frame. The first frame includes a first field and a second field. The first field indicates a duration of a first time resource. The second field is used to determine a purpose of the first time resource. The purpose of the first time resource includes: The first time resource is used to transmit a single-user physical layer protocol data unit (PHY protocol data unit, PPDU), or the first time resource is used to perform frame exchange. The first device sends the first frame to a second device.

Based on the foregoing technical solution, the first frame includes the first field and the second field. The first field indicates the duration of the first time resource. The second field may indicate that the first time resource is used to transmit the single-user PPDU. Alternatively, the second field indicates that the first time resource is used to perform frame exchange. The first frame may be applied to a scenario that has different purposes for a time resource, so that the first frame is universal.

In a possible design, when the first time resource is used to transmit the single-user PPDU, a duration of the single-user PPDU is equal to the duration of the first time resource. This ensures that a multi-link device that does not support STR may be aligned with single-user PPDUs sent on different links.

In a possible design, that the second field is used to determine the purpose of the first time resource includes the following cases: When the second field is set to a first preset value, the second field is used to determine that the first time resource is used to transmit the single-user PPDU. Alternatively, when the second field is set to a second preset value, the second field is used to determine that the first time resource is used to perform frame exchange.

In a possible design, that the second field is used to determine the purpose of the first time resource includes the following cases: When the second field is set to a first preset value, the second field is used to determine that the first time resource is used to transmit the single-user PPDU. When the second field is set to a second preset value, the second field is used to determine that the first time resource is used by a cooperation device to perform frame exchange, and the cooperation device and the first device do not belong to a same basic service set (basic service set, BSS). Alternatively, when the second field is set to a third preset value, the third field is used to determine that the first time resource is used by a peer-to-peer station to perform frame exchange.

In a possible design, the first frame further includes a trigger type field, and a value of the trigger type field is any one of 8 to 15.

In a possible design, the first frame is a basic (basic) trigger frame, and a B63 bit in the basic trigger frame is set to 1.

In a possible design, the first field and the second field are located in a common information field or a user information field of the first frame.

In a possible design, the first frame further includes an A-control (control) field. The A-control field includes a control identifier field and a control information field. A value of the control identifier field is any one of 7 to 14. The first field and the second field are located in the control information field.

In a possible design, the first frame further includes a triggered response scheduling (triggered response scheduling, TRS) A-control field. The A-control field includes a TRS control field. The TRS control field includes the first field and the second field. A reserved bit in the TRS control field is set to 1.

In a possible design, the communication method further includes: The first device receives a response frame sent by the second device. The response frame includes a third field. The third field indicates whether the second device accepts the first time resource.

In a possible design, the communication method further includes: The first device receives a first radio frame sent by the second device on the first time resource. A modulation and coding scheme (modulation and coding scheme, MCS) used to send the radio frame is less than or equal to a maximum MCS supported by the first device. In this way, the first device may parse the first radio frame, to learn that the second device accepts the first time resource.

In a possible design, the communication method further includes: The first device receives buffer status information sent by the second device. The buffer status information indicates a buffer data amount. It should be understood that the second device may assist the first device in allocating the time resource by sending the buffer status information to the first device.

In a possible design, when the second device is a cooperation device, the buffer data amount includes one or more of the following: a total uplink buffer data amount, a total downlink buffer data amount, or a sum of the total uplink buffer data amount and the total downlink buffer data amount. The total uplink buffer data amount is a sum of uplink buffer data amounts of one or more stations associated with the second device. The total downlink buffer data amount is a sum of downlink buffer data amounts of the one or more stations associated with the second device.

In a possible design, when the second device is a P2P station, the buffer data amount is a sum of buffer data amounts on one or more P2P links established by the second device.

According to a second aspect, a communication method is provided. The method includes: A second device receives a first frame sent by a first device. The first frame includes a first field and a second field. The first field indicates a duration of a first time resource. The second field is used to determine a purpose of the first time resource. The purpose of the first time resource includes: The first time resource is used to transmit a single-user physical layer protocol data unit PPDU, or the first time resource is used to perform frame exchange. The second device parses the first frame.

Based on the foregoing technical solution, the first frame includes the first field and the second field. The first field indicates the duration of the first time resource. The second field may indicate that the first time resource is used to transmit the single-user PPDU. Alternatively, the second field indicates that the first time resource is used to perform frame exchange. The first frame may be applied to a scenario that has different purposes for a time resource, so that the first frame is universal.

In a possible design, when the first time resource is used to transmit the single-user PPDU, a duration of the single-user PPDU is equal to the duration of the first time resource. This ensures that a multi-link device that does not support STR may be aligned with single-user PPDUs sent on different links.

In a possible design, that the second field is used to determine the purpose of the first time resource includes the following cases: When the second field is set to a first preset value, the second field is used to determine that the first time resource is used to transmit the single-user PPDU. Alternatively, when the second field is set to a second preset value, the second field is used to determine that the first time resource is used to perform frame exchange.

In a possible design, that the second field is used to determine the purpose of the first time resource includes the following cases: When the second field is set to a first preset value, the second field is used to determine that the first time resource is used to transmit the single-user PPDU. Alternatively, when the second field is set to a second preset value, the second field is used to determine that the first time resource is used by a cooperation device to perform frame exchange, and the cooperation device and the first device do not belong to a same basic service set. Alternatively, when the second field is set to a third preset value, the third field is used to determine that the first time resource is used by a peer-to-peer station to perform frame exchange.

In a possible design, the first frame further includes a trigger type field, and a value of the trigger type field is any one of 8 to 15.

In a possible design, the first frame is a basic (basic) trigger frame, and a B63 bit in the basic trigger frame is set to 1.

In a possible design, the first field and the second field are located in a common information field or a user information field of the first frame.

In a possible design, the first frame further includes an A-control (control) field. The A-control field includes a control identifier field and a control information field. A value of the control identifier field is any one of 7 to 14. The first field and the second field are located in the control information field.

In a possible design, the first frame further includes a triggered response scheduling TRS A-control (control) field. The A-control field includes a TRS control field. The TRS control field includes the first field and the second field. A reserved bit in the TRS control field is set to 1.

In a possible design, the communication method further includes: The second device sends a response frame to the first device. The response frame includes a third field. The third field indicates whether the second device accepts the first time resource.

In a possible design, the communication method further includes: The second device sends a first radio frame on the first time resource. An MCS used to send the radio frame is less than or equal to a maximum MCS supported by the first device.

In a possible design, the communication method further includes: The second device sends buffer status information to the first device. The buffer status information indicates a buffer data amount.

In a possible design, when the second device is a cooperation device, the buffer data amount includes one or more of the following: a total uplink buffer data amount, a total downlink buffer data amount, or a sum of the total uplink buffer data amount and the total downlink buffer data amount. The total uplink buffer data amount is a sum of uplink buffer data amounts of one or more stations associated with the second device. The total downlink buffer data amount is a sum of downlink buffer data amounts of the one or more stations associated with the second device.

In a possible design, when the second device is a P2P station, the buffer data amount is a sum of buffer data amounts on one or more P2P links established by the second device.

According to a third aspect, a communication method is provided. The method includes: A first device generates a second frame that carries a command and status (command and status, CAS) control field. The CAS control field includes a fourth field and a fifth field. The fourth field is used to determine whether to transfer a remaining time of a transmission opportunity (transmission opportunity, TXOP) to a second device, so that the second device communicates with the first device within the remaining time of the TXOP. The fifth field is used to determine whether to transfer the remaining time of the TXOP to the second device, so that the second device communicates with a third device within the remaining time of the TXOP. The third device does not include the first device. The first device sends the second frame that carries the CAS control field to the second device.

Based on the foregoing technical solutions, the fourth field can support use setting of the remaining time of the TXOP in one type of application scenario, and the fifth field can support use setting of the remaining time of the TXOP in another type of application scenario. Therefore, based on the fourth field and the fifth field, the second frame may be applied to an application scenario in which the remaining time of the TXOP is differently arranged, for example, a scenario to which an RDG mechanism is applied, a scheduled P2P scenario, or a CO-TDMA scenario. Therefore, the second frame is universal.

In a possible design, when the fourth field is set to a fourth preset value, the fourth field is used to determine to transfer the remaining time of the transmission opportunity TXOP to the second device, so that the second device communicates with the first device within the remaining time of the TXOP. Alternatively, when the fourth field is set to a fifth preset value, the fourth field is used to determine not to transfer the remaining time of the transmission opportunity TXOP to the second device.

In a possible design, when the fifth field is set to a fourth preset value, the fifth field indicates to determine to transfer the remaining time of the TXOP to the second device, so that the second device communicates with the third device within the remaining time of the TXOP. Alternatively, when the fifth field is set to a fifth preset value, the fifth field is used to determine not to transfer the remaining time of the transmission opportunity TXOP to the second device.

In a possible design, the fourth field and the fifth field cannot be both set to the fourth preset value.

In a possible design, the CAS control field further includes a sixth field. The sixth field indicates whether there is a limitation on a type of a data frame sent by the second device within the remaining time of the TXOP.

In a possible design, the CAS control field further includes a seventh field. The seventh field indicates whether the second device is allowed to transfer the remaining time of the TXOP to another device other than the first device.

In a possible design, the communication method further includes: The first device receives a response frame sent by the second device. The response frame includes an eighth field. The eighth field indicates whether the second device accepts the remaining time of the TXOP.

In a possible design, the communication method further includes: The first device receives a first radio frame sent by the second device within the remaining time of the TXOP. An MCS used to send the radio frame is less than or equal to a maximum MCS supported by the first device.

In a possible design, the communication method further includes: The first device receives buffer status information sent by the second device. The buffer status information indicates a buffer data amount.

In a possible design, when the second device is a cooperation device, the buffer data amount includes one or more of the following: a total uplink buffer data amount, a total downlink buffer data amount, or a sum of the total uplink buffer data amount and the total downlink buffer data amount. The total uplink buffer data amount is a sum of uplink buffer data amounts of one or more stations associated with the second device. The total downlink buffer data amount is a sum of downlink buffer data amounts of the one or more stations associated with the second device.

In a possible design, when the second device is a P2P station, the buffer data amount is a sum of buffer data amounts on one or more P2P links established by the second device.

According to a fourth aspect, a communication method is provided. The method includes: A second device receives a second frame that is sent by a first device and that carries a CAS control field. The CAS control field includes a fourth field and a fifth field. The fourth field is used to determine whether to transfer a remaining time of a TXOP to the second device, so that the second device communicates with the first device within the remaining time of the TXOP. The fifth field is used to determine whether to transfer the remaining time of the TXOP to the second device, so that the second device communicates with a third device within the remaining time of the TXOP. The third device does not include the first device. The second device parses the second frame that carries the CAS control field.

Based on the foregoing technical solutions, the fourth field can support use setting of the remaining time of the TXOP in one type of application scenario, and the fifth field can support use setting of the remaining time of the TXOP in another type of application scenario. Therefore, based on the fourth field and the fifth field, the second frame may be applied to an application scenario in which the remaining time of the TXOP is differently arranged, for example, a scenario to which an RDG mechanism is applied, a scheduled P2P scenario, or a CO-TDMA scenario. Therefore, the second frame is universal.

In a possible design, when the fourth field is set to a fourth preset value, the fourth field is used to determine to transfer the remaining time of the transmission opportunity TXOP to the second device, so that the second device communicates with the first device within the remaining time of the TXOP. Alternatively, when the fourth field is set to a fifth preset value, the fourth field is used to determine not to transfer the remaining time of the transmission opportunity TXOP to the second device.

In a possible design, when the fifth field is set to a fourth preset value, the fifth field indicates to determine to transfer the remaining time of the TXOP to the second device, so that the second device communicates with the third device within the remaining time of the TXOP. Alternatively, when the fifth field is set to a fifth preset value, the fifth field is used to determine not to transfer the remaining time of the transmission opportunity TXOP to the second device.

In a possible design, the fourth field and the fifth field cannot be both set to the fourth preset value.

In a possible design, the CAS control field further includes a sixth field. The sixth field indicates whether there is a limitation on a type of a data frame sent by the second device within the remaining time of the TXOP.

In a possible design, the CAS control field further includes a seventh field. The seventh field indicates whether the second device is allowed to transfer the remaining time of the TXOP to another device other than the first device.

In a possible design, the communication method further includes: The second device sends a response frame to the first device. The response frame includes an eighth field. The eighth field indicates whether the second device accepts the remaining time of the TXOP.

In a possible design, the communication method further includes: The second device sends a first radio frame within the remaining time of the TXOP. An MCS used to send the radio frame is less than or equal to a maximum MCS supported by the first device.

In a possible design, the communication method further includes: The second device sends buffer status information to the first device. The buffer status information indicates a buffer data amount.

In a possible design, when the second device is a cooperation device, the buffer data amount includes one or more of the following: a total uplink buffer data amount, a total downlink buffer data amount, or a sum of the total uplink buffer data amount and the total downlink buffer data amount. The total uplink buffer data amount is a sum of uplink buffer data amounts of one or more stations associated with the second device. The total downlink buffer data amount is a sum of downlink buffer data amounts of the one or more stations associated with the second device.

In a possible design, when the second device is a P2P station, the buffer data amount is a sum of buffer data amounts on one or more P2P links established by the second device.

According to a fifth aspect, a communication apparatus is provided, including a processing module and a communication module. The processing module is configured to generate a first frame. The first frame includes a first field and a second field. The first field indicates a duration of a first time resource. The second field is used to determine a purpose of the first time resource. The purpose of the first time resource includes: The first time resource is used to transmit a single-user PPDU, or the first time resource is used to perform frame exchange. The communication module is configured to send the first frame to a second device.

In a possible design, when the first time resource is used to transmit the single-user PPDU, a duration of the single-user PPDU is equal to the duration of the first time resource.

In a possible design, that the second field is used to determine the purpose of the first time resource includes the following cases: When the second field is set to a first preset value, the second field is used to determine that the first time resource is used to transmit the single-user PPDU. Alternatively, when the second field is set to a second preset value, the second field is used to determine that the first time resource is used to perform frame exchange.

In a possible design, that the second field is used to determine the purpose of the first time resource includes the following cases: When the second field is set to a first preset value, the second field is used to determine that the first time resource is used to transmit the single-user PPDU. When the second field is set to a second preset value, the second field is used to determine that the first time resource is used by a cooperation device to perform frame exchange, and the cooperation device and the first device do not belong to a same basic service set. When the second field is set to a third preset value, the third field is used to determine that the first time resource is used by a peer-to-peer station to perform frame exchange.

In a possible design, the first frame further includes a trigger type field, and a value of the trigger type field is any one of 8 to 15.

In a possible design, the first frame is a basic trigger frame, and a B63 bit in the basic trigger frame is set to 1.

In a possible design, the first field and the second field are located in a common information field or a user information field of the first frame.

In a possible design, the first frame further includes an A-control field. The A-control field includes a control identifier field and a control information field. A value of the control identifier field is any one of 7 to 14. The first field and the second field are located in the control information field.

In a possible design, the first frame further includes a TRS A-control field. The A-control field includes a TRS control field. The TRS control field includes the first field and the second field. A reserved bit in the TRS control field is set to 1.

In a possible design, the communication module is further configured to receive a response frame sent by the second device. The response frame includes a third field. The third field indicates whether the second device accepts the first time resource.

In a possible design, the communication module is further configured to receive a first radio frame sent by the second device on the first time resource. An MCS used to send the radio frame is less than or equal to a maximum MCS supported by the first device.

In a possible design, the communication module is further configured to receive buffer status information sent by the second device. The buffer status information indicates a buffer data amount.

In a possible design, when the second device is a cooperation device, the buffer data amount includes one or more of the following: a total uplink buffer data amount, a total downlink buffer data amount, or a sum of the total uplink buffer data amount and the total downlink buffer data amount. The total uplink buffer data amount is a sum of uplink buffer data amounts of one or more stations associated with the second device. The total downlink buffer data amount is a sum of downlink buffer data amounts of the one or more stations associated with the second device.

In a possible design, when the second device is a P2P station, the buffer data amount is a sum of buffer data amounts on one or more P2P links established by the second device.

According to a sixth aspect, a communication apparatus is provided, including a processing module and a communication module. The communication module is configured to receive a first frame sent by a first device. The first frame includes a first field and a second field. The first field indicates a duration of a first time resource. The second field is used to determine a purpose of the first time resource. The purpose of the first time resource includes: The first time resource is used to transmit a single-user physical layer protocol data unit PPDU, or the first time resource is used to perform frame exchange. The processing module is configured to parse the first frame.

In a possible design, when the first time resource is used to transmit the single-user PPDU, a duration of the single-user PPDU is equal to the duration of the first time resource.

In a possible design, that the second field is used to determine the purpose of the first time resource includes the following cases: When the second field is set to a first preset value, the second field is used to determine that the first time resource is used to transmit the single-user PPDU. Alternatively, when the second field is set to a second preset value, the second field is used to determine that the first time resource is used to perform frame exchange.

In a possible design, that the second field is used to determine the purpose of the first time resource includes the following cases: When the second field is set to a first preset value, the second field is used to determine that the first time resource is used to transmit the single-user PPDU. Alternatively, when the second field is set to a second preset value, the second field is used to determine that the first time resource is used by a cooperation device to perform frame exchange, and the cooperation device and the first device do not belong to a same basic service set. Alternatively, when the second field is set to a third preset value, the third field is used to determine that the first time resource is used by a peer-to-peer station to perform frame exchange.

In a possible design, the first frame further includes a trigger type field, and a value of the trigger type field is any one of 8 to 15.

In a possible design, the first frame is a basic (basic) trigger frame, and a B63 bit in the basic trigger frame is set to 1.

In a possible design, the first field and the second field are located in a common information field or a user information field of the first frame.

In a possible design, the first frame further includes an A-control field. The A-control field includes a control identifier field and a control information field. A value of the control identifier field is any one of 7 to 14. The first field and the second field are located in the control information field.

In a possible design, the first frame further includes a TRS A-control field. The A-control field includes a TRS control field. The TRS control field includes the first field and the second field. A reserved bit in the TRS control field is set to 1.

In a possible design, the communication module is further configured to send a response frame to the first device. The response frame includes a third field. The third field indicates whether the second device accepts the first time resource.

In a possible design, the communication module is further configured to send a first radio frame on the first time resource. An MCS used to send the radio frame is less than or equal to a maximum MCS supported by the first device.

In a possible design, the communication module is further configured to send buffer status information to the first device. The buffer status information indicates a buffer data amount.

In a possible design, when the second device is a cooperation device, the buffer data amount includes one or more of the following: a total uplink buffer data amount, a total downlink buffer data amount, or a sum of the total uplink buffer data amount and the total downlink buffer data amount. The total uplink buffer data amount is a sum of uplink buffer data amounts of one or more stations associated with the second device. The total downlink buffer data amount is a sum of downlink buffer data amounts of the one or more stations associated with the second device.

In a possible design, when the second device is a P2P station, the buffer data amount is a sum of buffer data amounts on one or more P2P links established by the second device.

According to a seventh aspect, a communication apparatus is provided, including a processing module and a communication module. The processing module is configured to generate a second frame that carries a command and status CAS control field. The CAS control field includes a fourth field and a fifth field. The fourth field is used to determine whether to transfer a remaining time of a transmission opportunity TXOP to a second device, so that the second device communicates with a first device within the remaining time of the TXOP. The fifth field is used to determine whether to transfer the remaining time of the TXOP to the second device, so that the second device communicates with a third device within the remaining time of the TXOP. The third device does not include the first device. The communication module is configured to send, to the second device, the second frame that carries the CAS control field.

In a possible design, when the fourth field is set to a fourth preset value, the fourth field is used to determine to transfer the remaining time of the transmission opportunity TXOP to the second device, so that the second device communicates with the first device within the remaining time of the TXOP. Alternatively, when the fourth field is set to a fifth preset value, the fourth field is used to determine not to transfer the remaining time of the transmission opportunity TXOP to the second device.

In a possible design, when the fifth field is set to a fourth preset value, the fifth field indicates to determine to transfer the remaining time of the TXOP to the second device, so that the second device communicates with the third device within the remaining time of the TXOP. Alternatively, when the fifth field is set to a fifth preset value, the fifth field is used to determine not to transfer the remaining time of the transmission opportunity TXOP to the second device.

In a possible design, the fourth field and the fifth field cannot be both set to the fourth preset value.

In a possible design, the CAS control field further includes a sixth field. The sixth field indicates whether there is a limitation on a type of a data frame sent by the second device within the remaining time of the TXOP.

In a possible design, the CAS control field further includes a seventh field. The seventh field indicates whether the second device is allowed to transfer the remaining time of the TXOP to another device other than the first device.

In a possible design, the communication module is further configured to receive a response frame sent by the second device. The response frame includes an eighth field. The eighth field indicates whether the second device accepts the remaining time of the TXOP.

In a possible design, the communication module is further configured to receive a first radio frame sent by the second device within the remaining time of the TXOP. An MCS used to send the radio frame is less than or equal to a maximum MCS supported by the first device.

In a possible design, the communication module is further configured to receive buffer status information sent by the second device. The buffer status information indicates a buffer data amount.

In a possible design, when the second device is a cooperation device, the buffer data amount includes one or more of the following: a total uplink buffer data amount, a total downlink buffer data amount, or a sum of the total uplink buffer data amount and the total downlink buffer data amount. The total uplink buffer data amount is a sum of uplink buffer data amounts of one or more stations associated with the second device. The total downlink buffer data amount is a sum of downlink buffer data amounts of the one or more stations associated with the second device.

In a possible design, when the second device is a P2P station, the buffer data amount is a sum of buffer data amounts on one or more P2P links established by the second device.

According to an eighth aspect, a communication apparatus is provided, including a processing module and a communication module. The communication module is configured to receive a second frame that is sent by a first device and that carries a CAS control field. The CAS control field includes a fourth field and a fifth field. The fourth field is used to determine whether to transfer a remaining time of a transmission opportunity TXOP to a second device, so that the second device communicates with the first device within the remaining time of the TXOP. The fifth field is used to determine whether to transfer the remaining time of the TXOP to the second device, so that the second device communicates with a third device within the remaining time of the TXOP. The third device does not include the first device. The processing module is configured to parse the second frame that carries the CAS control field.

In a possible design, when the fourth field is set to a fourth preset value, the fourth field is used to determine to transfer the remaining time of the transmission opportunity TXOP to the second device, so that the second device communicates with the first device within the remaining time of the TXOP. Alternatively, when the fourth field is set to a fifth preset value, the fourth field is used to determine not to transfer the remaining time of the transmission opportunity TXOP to the second device.

In a possible design, when the fifth field is set to a fourth preset value, the fifth field indicates to determine to transfer the remaining time of the TXOP to the second device, so that the second device communicates with the third device within the remaining time of the TXOP. Alternatively, when the fifth field is set to a fifth preset value, the fifth field is used to determine not to transfer the remaining time of the transmission opportunity TXOP to the second device.

In a possible design, the fourth field and the fifth field cannot be both set to the fourth preset value.

In a possible design, the CAS control field further includes a sixth field. The sixth field indicates whether there is a limitation on a type of a data frame sent by the second device within the remaining time of the TXOP.

In a possible design, the CAS control field further includes a seventh field. The seventh field indicates whether the second device is allowed to transfer the remaining time of the TXOP to another device other than the first device.

In a possible design, the communication module is further configured to send a response frame to the first device. The response frame includes an eighth field. The eighth field indicates whether the second device accepts the remaining time of the TXOP.

In a possible design, the communication module is further configured to send a first radio frame within the remaining time of the TXOP. An MCS used to send the radio frame is less than or equal to a maximum MCS supported by the first device.

In a possible design, the communication module is further configured to send buffer status information to the first device. The buffer status information indicates a buffer data amount.

In a possible design, when the second device is a cooperation device, the buffer data amount includes one or more of the following: a total uplink buffer data amount, a total downlink buffer data amount, or a sum of the total uplink buffer data amount and the total downlink buffer data amount. The total uplink buffer data amount is a sum of uplink buffer data amounts of one or more stations associated with the second device. The total downlink buffer data amount is a sum of downlink buffer data amounts of the one or more stations associated with the second device.

In a possible design, when the second device is a P2P station, the buffer data amount is a sum of buffer data amounts on one or more P2P links established by the second device.

According to a ninth aspect, a communication apparatus is provided. The communication apparatus includes a processor and a transceiver. The processor and the transceiver are configured to implement any method provided in any one of the first aspect to the fourth aspect. The processor is configured to perform a processing action in the corresponding method, and the transceiver is configured to perform a receiving/sending action in the corresponding method.

According to a tenth aspect, a computer-readable storage medium is provided. The computer-readable storage medium stores computer instructions, and when the computer instructions are run on a computer, the computer is enabled to perform any method provided in any one of the first aspect to the fourth aspect.

According to an eleventh aspect, a computer program product including computer instructions is provided. When the computer instructions are run on a computer, the computer is enabled to perform any method provided in any one of the first aspect to the fourth aspect.

According to a twelfth aspect, a chip is provided, including a processing circuit and a transceiver pin. The processing circuit and the transceiver pin are configured to implement any method provided in any one of the first aspect to the fourth aspect. The processing circuit is configured to perform a processing action in the corresponding method, and the transceiver pin is configured to perform a receiving/sending action in the corresponding method.

It should be noted that for technical effect brought by any design of the fifth aspect to the twelfth aspect, refer to technical effect brought by a corresponding design of the first aspect to the fourth aspect. Details are not described herein again.

### BRIEF DESCRIPTION OF DRAWINGS

FIG. 1 is a schematic diagram of a frame structure of a trigger frame;
FIG. 2 is a schematic diagram of a common information field in a trigger frame;
FIG. 3 is a schematic diagram of a user information field in a trigger frame;
FIG. 4(a) is a schematic diagram of an A-control field;
FIG. 4(b) is a schematic diagram of a TRS control field;
FIG. 5 is a schematic diagram of a communication scenario of an AP multi-link device and a STA multi-link device according to an embodiment of this application;
FIG. 6(a) and FIG. 6(b) are schematic diagrams of structures of an AP multi-link device and a STA multi-link device that participate in communication;
FIG. 7 is a schematic diagram of applying a radio frame #1 to a multi-link scenario according to an embodiment of this application;
FIG. 8 is a schematic diagram of a scheduled P2P scenario according to an embodiment of this application;
FIG. 9 is a schematic diagram of a CO-TDMA scenario according to an embodiment of this application;
FIG. 10 is a schematic diagram of applying a radio frame #2 to a scheduled P2P scenario according to an embodiment of this application;
FIG. 11 is a schematic diagram of applying a radio frame #2 to a CO-TDMA scenario according to an embodiment of this application;
FIG. 12 is a flowchart of a communication method according to an embodiment of this application;
FIG. 13 is a flowchart of another communication method according to an embodiment of this application;
FIG. 14 is a flowchart of another communication method according to an embodiment of this application;
FIG. 15 is a schematic diagram of a CAS control field in a conventional technology;
FIG. 16 is a schematic diagram of a CAS control field according to an embodiment of this application;
FIG. 17 is a flowchart of another communication method according to an embodiment of this application;
FIG. 18 is a flowchart of another communication method according to an embodiment of this application;
FIG. 19 is a flowchart of another communication method according to an embodiment of this application;
FIG. 20 is a flowchart of another communication method according to an embodiment of this application;
FIG. 21 is a schematic diagram of a structure of one type of buffer status information according to an embodiment of this application;
FIG. 22 is a schematic diagram of a structure of another type of buffer status information according to an embodiment of this application;
FIG. 23 is a schematic diagram of a structure of another type of buffer status information according to an embodiment of this application;
FIG. 24 is a schematic diagram of a structure of another type of buffer status information according to an embodiment of this application;
FIG. 25 is a schematic diagram of a structure of a communication apparatus according to an embodiment of this application; and
FIG. 26 is a schematic diagram of a structure of another communication apparatus according to an embodiment of this application.

### DESCRIPTION OF EMBODIMENTS

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" and "second" do not limit a number and an execution sequence, and the terms such as "first" and "second" do not indicate a definite difference.

In this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word "example" or "for example" or the like is intended to present a related concept in a specific manner.

The technical solutions provided in this application may be applied to various communication systems, for example, a system using the IEEE 802.11 standard. For example, the IEEE 802.11 standard includes but is not limited to the 802.11be standard or a next-generation 802.11 standard. Application scenarios of the technical solutions of this application include communication between an AP and a STA, communication between APs, communication between STAs, and the like.

STAs in this application may be various user terminals, user apparatuses, access apparatuses, subscriber stations, subscriber units, mobile stations, user agents, user devices, or other devices that have a wireless communication function. The user terminals may include various handheld devices, vehicle-mounted devices, wearable devices, computing devices that have the wireless communication function, or other processing devices connected to a wireless modem, and include various forms of user equipments (user equipments, UEs), mobile stations (mobile stations, MSs), terminals (terminals), terminal equipments (terminal equipments), portable communication devices, handheld devices, portable computing devices, entertainment devices, game devices or systems, and global positioning system devices, or any other suitable device configured to perform network communication via wireless media. Herein, for ease of description, the devices mentioned above are collectively referred to as stations or STAs.

The access point AP in this application is an apparatus that is deployed in a wireless communication network and that provides a wireless communication function for a STA associated with the access point AP. The access point AP may be used as a hub of the communication system, and may be a communication device such as a base station, a router, a gateway, a repeater, a communication server, a switch, or a bridge. The base station may include various forms of macro base stations, micro base stations, relay stations, and the like. Herein, for ease of description, the devices mentioned above are collectively referred to as access points APs.

The following first briefly describes related technical terms in embodiments of this application, to facilitate understanding of the technical solutions of this application.

### 1. BSS

The BSS is used to describe a group of devices that can communicate with each other in a wireless local area network (wireless local area network, WLAN). The WLAN may include a plurality of BSSs. Each BSS has a unique identifier, which is referred to as a basic service set identifier (BSSID). Optionally, one BSS may include one AP and a plurality of STAs associated with the AP.

### 2. TXOP

A TXOP is a basic unit in wireless channel access. The TXOP includes an initial time point and maximum duration (TXOP limit). In the TXOP limit, a station that obtains the TXOP may not perform channel contention again, and continuously use a channel to transmit a plurality of data frames.

The TXOP may be obtained through contention or hybrid coordinator (hybrid coordinator, HC) allocation. The TXOP obtained through contention may be referred to as an enhanced distributed channel access (enhanced distributed channel access, EDCA) TXOP. The TXOP obtained through HC allocation may be referred to as a hybrid coordination function controlled channel access (hybrid coordination function controlled channel access, HCCA) TXOP.

It should be understood that this application does not include obtaining of the TXOP. For specific details of a manner of obtaining the TXOP, refer to the conventional technology.

### 3. Trigger frame

In an uplink transmission process or a downlink transmission process, a trigger frame needs to be used to implement information exchange in multi-user communication.

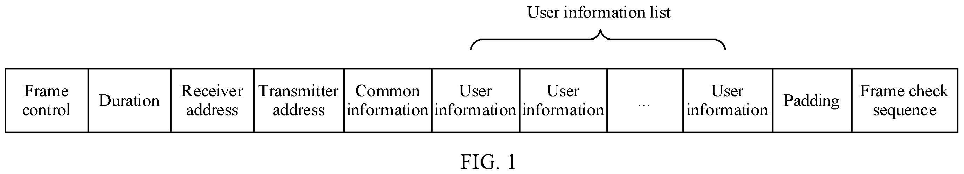

For example, FIG. 1 is a schematic diagram of a frame structure of a trigger frame. As shown in FIG. 1, the trigger frame includes: a frame control (frame control) field, a duration (duration) field, a receiving address (receiving address, RA) field, a transmitting address (transmitting address, TA) field, a common information (common info) field, a user information list (user info list) field, a padding (padding) field, and a frame check sequence (frame check sequence, FCS) field.

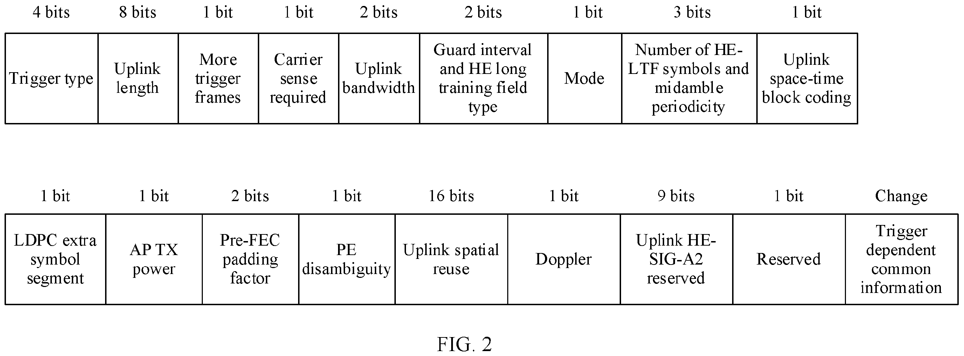

The common information field includes common information that needs to be read by all stations. As shown in FIG. 2, the common information field includes: a trigger type (trigger type) subfield, an uplink length (UL length) subfield, a more trigger frame (more TF) subfield, a carrier sense required (CS required) subfield, an uplink bandwidth (UL bandwidth) subfield, a guard interval and HE long training field type (GI and HE-LTF type) subfield, a mode (MU-MIMO HE-LTF mode) subfield, a number of HE-LTFs and midamble periodicity (number of HE-LTF symbols and Midamble periodicity) subfield, an uplink space-time block coding (UL STBC) subfield, an LDPC extra symbol segment (LDPC extra symbol segment) subfield, an AP transmit power (AP TX power) subfield, a pre-FEC padding factor (Pre-FEC padding factor) subfield, a packet extension disambiguity (PE disambiguity) subfield, an uplink spatial reuse (UL spatial reuse) subfield, a Doppler (Doppler) subfield, an uplink HE-SIG-A2 reserved (UL HE-SIG-A2 Reserved) subfield, a reserved (reserved) subfield, and a trigger dependent common info (trigger dependent Common info) field.

The trigger type subfield occupies four bits, and indicates a type of the trigger frame. In the conventional technology, for a correspondence between a value of the trigger type subfield and a type of the trigger frame, refer to Table 1.

**Table 1**

| Value of a trigger type field | Type of a trigger frame |
|---|---|
| 0 | Basic (basic) |
| 1 | Beamforming report poll (Beamforming report poll, BFRP) |
| 2 | Multi-user block acknowledgment request (multi-user block ack request, MU-BAR) |
| 3 | Multi-user request to send (Multi-user Request To Send, MU-RTS) |
| 4 | Buffer status report poll (buffer status report poll, BSRP) |
| 5 | Group cast retransmission (group cast retransmission, GCR) MU-BAR |
| 6 | Bandwidth query report poll (bandwidth query report poll, BQRP) |
| 7 | NDP feedback report poll (NDP feedback report poll, NFRP) |
| 8 to 15 | Reserved |

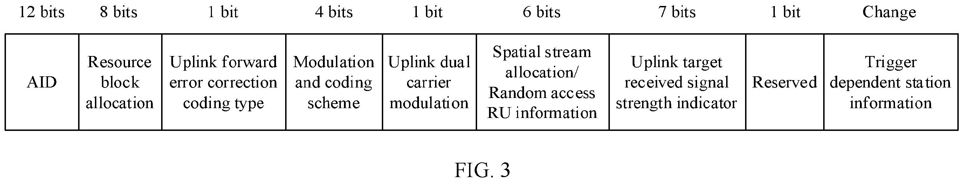

The user information list field of the trigger frame may include a plurality of user information fields. In the 802.11ax standard, a structure of the user information field may be shown in FIG. 3. The user information field may include: an AID subfield, a resource block allocation (RU allocation) field, an uplink forward error correction coding type (UL FEC coding type) field, an uplink modulation and coding scheme (UL HE-MCS) field, an uplink dual-carrier modulation (UL DCM) field, a spatial stream allocation/random access RU information (SS allocation/RA-RU information) field, an uplink target received signal strength indicator (UL target RSSI) field, a reserved (reserved) field, and a trigger dependent user info (trigger dependent user info) field.

### 4. PPDU type

To adapt to different transmission scenarios, four PPDU types are added to a physical layer in the 802.11ax: a single-user (single user, SU) PPDU, an extended range (extended range) PPDU, a multi-user (multi user, MU) PPDU, and a trigger-based (trigger-based, TB) PPDU.

The single-user PPDU is mainly applied to a single-user scenario.

The extended range PPDU is mainly applied to a single-user scenario far away from an AP, for example, an outdoor scenario.

The multi-user PPDU is mainly applied to a multi-user scenario, and may be simultaneously transmitted to one or more users for one or more times.

The TB PPDU is used to respond to a trigger frame. The TB PPDU is mainly transmitted in an uplink orthogonal frequency division multiple access (orthogonal frequency division multiple access, OFDMA) or uplink MU-multiple-input multiple-output (multiple in multiple out, MIMO) scenario.

### 5. A-control field

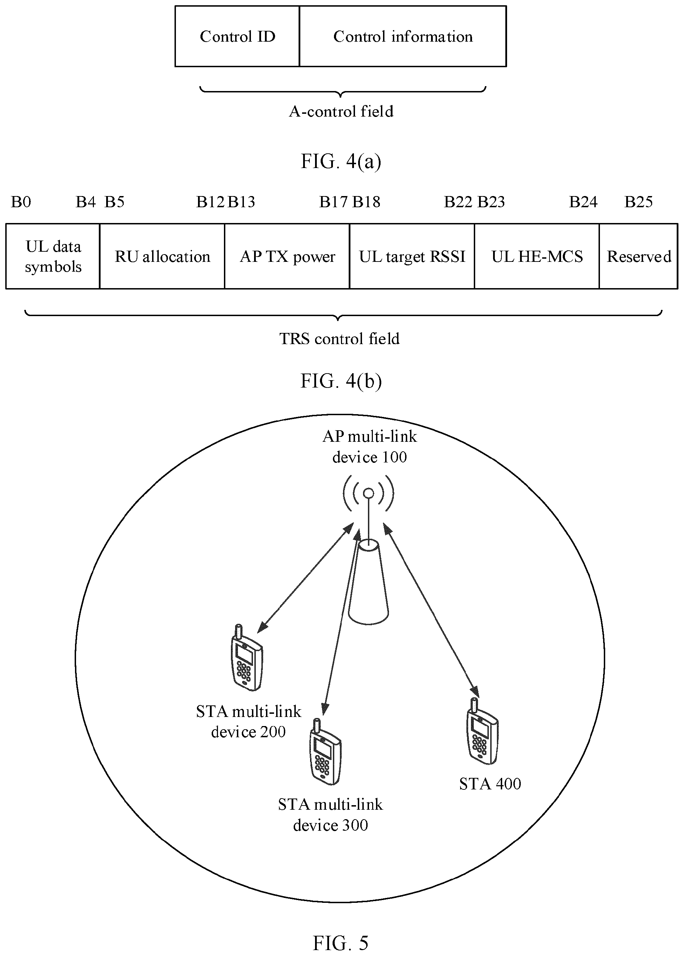

As shown in FIG. 4(a), an A-control field includes a control identifier (control ID) field and a control information (control information) field. The control ID field occupies four bits. A number of bits occupied by the control information field varies according to a value (value) of the control ID field.

Currently, for a correspondence between the value of the control ID field and a meaning (meaning), refer to Table 2.

**Table 2**

| Control ID value | Meaning | Length of a control information field (bits) | Content of a control information field |
|---|---|---|---|
| 0 | Triggered response scheduling (triggered response scheduling, TRS) | 26 | TRS control |
| 1 | Operating mode (operating mode, OM) | 12 | OM control |
| 2 | High-efficiency link adaptation (HE link adaptation, HLA) | 26 | HLA control |
| 3 | Buffer status report (buffer status report, BSR) | 26 | BSR control |
| 4 | Uplink power headroom (UL power headroom, UPH) | 8 | UPH control |
| 5 | Bandwidth query report (bandwidth query report, BQR) | 10 | BQR control |
| 6 | Command and status (command and status, CAS) | 8 | CAS control |
| 7 to 14 | Reserved (reserved) | | |
| 15 | All ones (ones need expansion surely, ONES) | 26 | High-efficiency control field (HT control field) operation (operation) |

For example, description is provided with reference to Table 2. When the value of the control ID field in the A-control field is 3, the control information field in the A-control field is used as a BSR control field.

When the value of the control ID field in the A-control field is 6, the control information field in the A-control field is used as a CAS control field.

When the value of the control ID field in the A-control field is 8, the control information field in the A-control field is used as a TRS control field.

As shown in FIG. 4(b), the TRS control field in the conventional technology includes an uplink data symbol (UL data symbol) field, a resource block allocation (RU allocation) field, an access point transmit power (AP TX power) field, a UL target RSSI field, a UL HE-MCS field and a reserved field.

In FIG. 4(b), bits occupied by the TRS control field are sequentially sorted from a least significant bit to a most significant bit, and may be numbered B0 to B25 bits. The UL data symbol field occupies the B0 to B4 bits, the RU allocation field occupies the B5 to B12 bits, the AP TX power field occupies the B13 to B17 bits, the UL target RSSI field occupies the B18 to B22 bits, the UL HE-MCS field occupies the B23 and B24 bits, and the reserved field occupies the B25 bit.

The foregoing describes the terms in embodiments of this application, and details are not described below again.

According to the current IEEE 802.11 next-generation wireless fidelity (Wireless Fidelity, Wi-Fi) protocol, an extremely high throughput (Extremely high throughput, EHT) device supports a plurality of streams, a plurality of frequency bands (such as 2.4 GHz, 5 GHz, and 6 GHz frequency bands), cooperation of a plurality of channels in a same frequency band, and other manners, to improve a peak throughput and reduce a service transmission delay. The plurality of frequency bands or the plurality of channels may be collectively referred to as a multi-link.

The multi-link device includes one or more affiliated stations, and the affiliated stations may be logical stations or physical stations. In this embodiment of this application, "the multi-link device includes an affiliated station" may be briefly described as "the multi-link device includes a station".

The affiliated station may be an access point (access point, AP) or a non-access point station (non-access point station, non-AP STA). For ease of description, in embodiments of this application, a multi-link device whose affiliated station is an AP may be referred to as a multi-link AP, an AP MLD, or an AP multi-link device; and a multi-link device whose affiliated station is a STA may be referred to as a multi-link STA, a STA multi-link device, or a STA MLD, or a non-AP MLD.

The multi-link device may implement wireless communication in compliance with the 802.11 system protocol. For example, the 802.11 system protocol may be an 802.11ax protocol, an 802.11be protocol, or a next-generation 802.11 protocol. This is not limited in this embodiment of this application.

The multi-link device may communicate with another device. In this embodiment of this application, the another device may be a multi-link device, or may not be a multi-link device.

For example, FIG. 5 is a schematic diagram of a communication scenario of an AP multi-link device and a STA multi-link device. As shown in FIG. 5, one AP multi-link device may be associated with a plurality of STA multi-link devices and a single-link STA. For example, an AP multi-link device 100 is associated with a STA multi-link device 200, a STA multi-link device 300, and a STA 400. It should be understood that a plurality of APs in an AP multi-link device respectively operate on a plurality of links, a plurality of STAs in a STA multi-link device respectively operate on a plurality of links, and one STA in the STA multi-link device is associated with one AP in an AP multi-link device on an operating link of the STA. A single-link STA is associated with an AP in an AP multi-link device on an operating link of the STA.

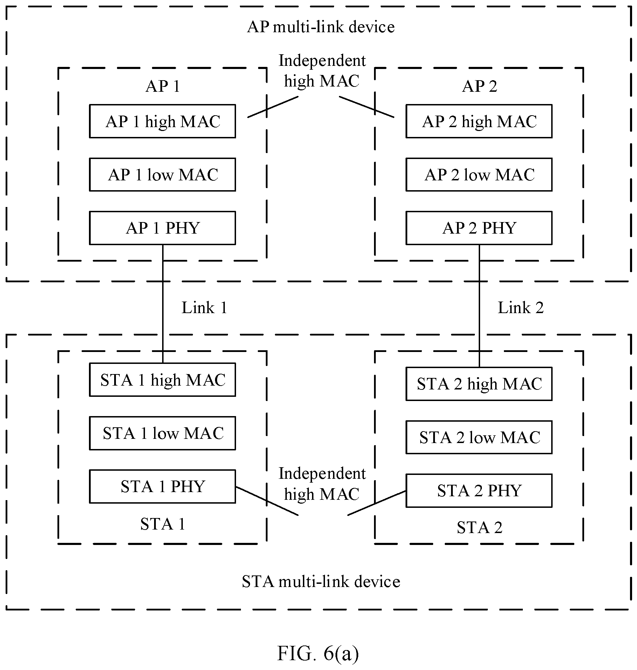

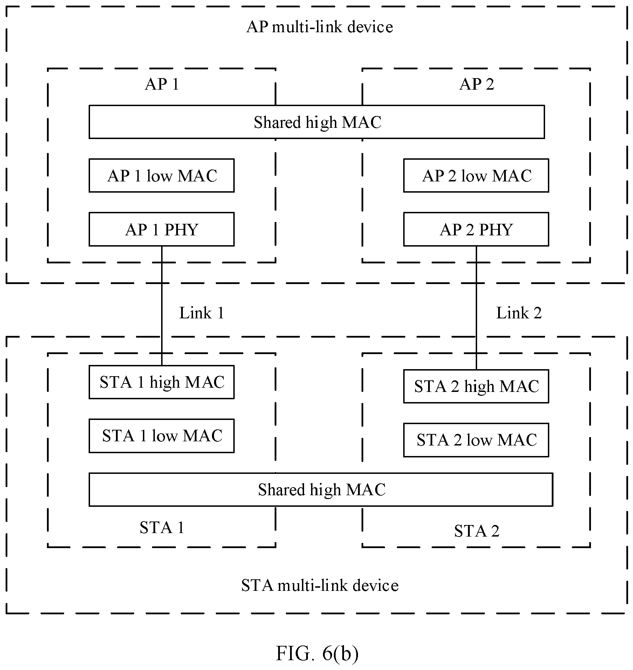

FIG. 6(a) and FIG. 6(b) are schematic diagrams of structures of an AP multi-link device and a STA multi-link device that participate in communication. The 802.11 standard focuses on 802.11 physical layer (Physical layer, PHY) and media access control (Media Access Control, MAC) layer parts of an AP multi-link device and a STA multi-link device (for example, a mobile phone and a notebook computer).

As shown in FIG. 6(a), a plurality of APs included in the AP multi-link device are independent of each other at a low MAC (low MAC) layer and a PHY layer, and are also independent of each other at a high MAC (high MAC) layer. A plurality of STAs included in the STA multi-link device are independent of each other at the low MAC layer and the PHY layer, and are also independent of each other at the high MAC layer.

As shown in FIG. 6(b), a plurality of APs included in the AP multi-link device are independent of each other at a low MAC layer and a PHY layer, and share a high MAC (High MAC) layer. A plurality of STAs included in the STA multi-link device are independent of each other at the low MAC (Low MAC) layer and the PHY layer, and share the high MAC (High MAC) layer.

Certainly, the STA multi-link device may use a structure in which high MAC layers are independent of each other, and the AP multi-link device may use a structure in which a high MAC layer is shared. Alternatively, the STA multi-link device uses a structure in which a high MAC layer is shared, and the AP multi-link device uses a structure in which high MAC layers are independent of each other. For example, the high MAC layer or the low MAC layer may be implemented by one processor in a chip system of the multi-link device, or may be implemented by different processing modules in a chip system.

A frequency band on which the multi-link device operates may include but is not limited to sub 1 GHz, 2.4 GHz, 5 GHz, 6 GHz, and a high frequency 60 GHz.

The multi-link device may support simultaneous data transmitting and receiving (simultaneously transmit and receive, STR), or the multi-link device may not support simultaneous data transmitting and receiving. That the multi-link device supports simultaneous data transmitting and receiving means that in a process of transmitting data on one link, the multi-link device can receive data on another link. That the multi-link device does not support simultaneous data transmitting and receiving means that in a process of transmitting data on one link, the multi-link device cannot receive data on another link.

When the STA multi-link device does not support simultaneous data receiving and transmitting, in a process of transmitting data between the STA multi-link device and the AP multi-link device, radio frames sent by the AP in the multi-link device on a plurality of links are aligned at an end, and in addition, response frames sent by the STA multi-link device on a plurality of links are aligned at both start time and end time.

In a communication scenario of a multi-link device that does not support STR, a radio frame is needed to control a length of a response frame, to ensure that response frames transmitted on different links can be aligned.

For ease of description, the "communication scenario of a multi-link device that does not support STR" is referred to as a "multi-link scenario" for short below.

The trigger frame defined in the current standard is not applicable to the multi-link scenario described above. The reasons are as follows:
(1) An existing trigger frame is designed for a plurality of users to simultaneously send an uplink TB PPDU. Therefore, the existing trigger frame needs to indicate information such as an MCS, an RU, and transmit power. Consequently, the existing trigger frame causes unnecessary system overheads.
(2) An existing trigger frame can trigger only a TB PPDU. In the multi-link scenario, a radio frame used to control a length of a response frame is used to trigger only one station to respond, so that the station does not need to use the TB PPDU, but may use a single-user PPDU. The single-user PDDU has more advantages than the TB PPDU: (1) The single-user PPDU can better protect a channel. A third-party station can parse content of the single-user PDDU, but cannot parse content of the TB PPDU. (2) The single-user PPDU has lower overheads in a physical layer frame header than the TB PPDU.

To resolve this technical problem, a radio frame #1 applied to the multi-link scenario is provided. The radio frame # 1 may trigger a station to respond in a single-user PPDU manner. The radio frame # 1 includes an assigned time duration (assigned time duration) field. The assigned duration field indicates a length that is of a single-user PPDU and that is fed back by the station.

The radio frame #1 may be referred to as a single-user trigger frame. It should be understood that the radio frame #1 may be aggregated or carried in the downlink data.

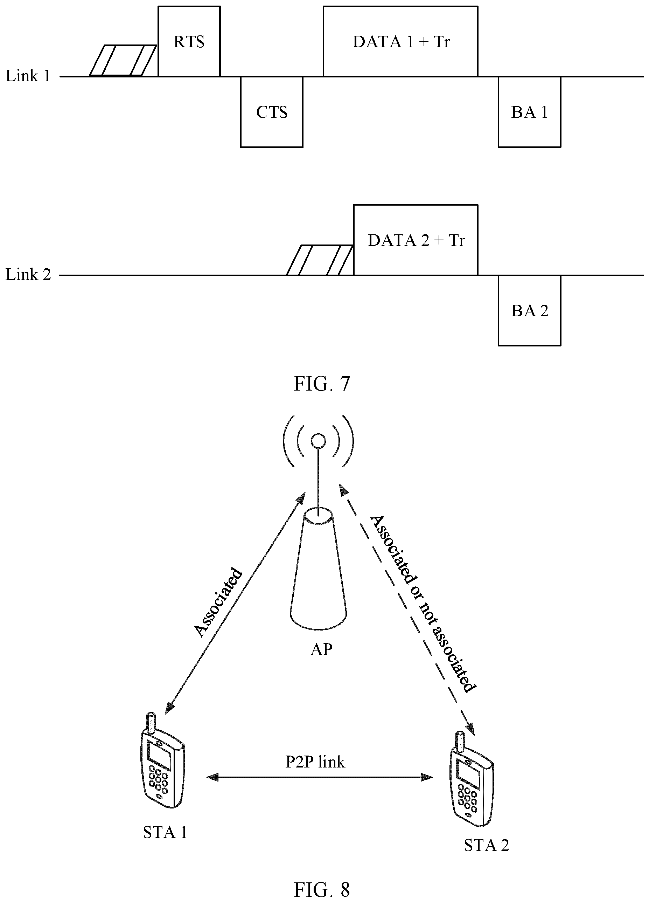

For example, FIG. 7 shows an application example of the radio frame #1 in the multi-link scenario. A transmitter sends data (data) 1 and the radio frame #1 to a receiver on a link 1, and sends data 2 and the radio frame #1 to the receiver on a link 2. The receiver sends a block acknowledgment (block ack, BA) frame 1 on the link 1 and sends a BA frame 2 on the link based on an indication of the single-user trigger frame. Both the BA frame 1 and the BA frame 2 are aligned in time domain. In FIG. 7, "Tr" represents the radio frame #1.

Further, the IEEE802.11be standard further supports a scheduled P2P mechanism and a CO-TDMA mechanism.

For example, FIG. 8 is a schematic diagram of a scheduled P2P scenario. As shown in FIG. 8, an AP is associated with a STA 1, and the AP may be associated with or not associated with a STA 2. A P2P link is established between the STA 1 and the STA 2. The AP may allocate a time resource to the STA 1, so that the STA 1 communicates with the STA 2 over the P2P link on the allocated time resource.

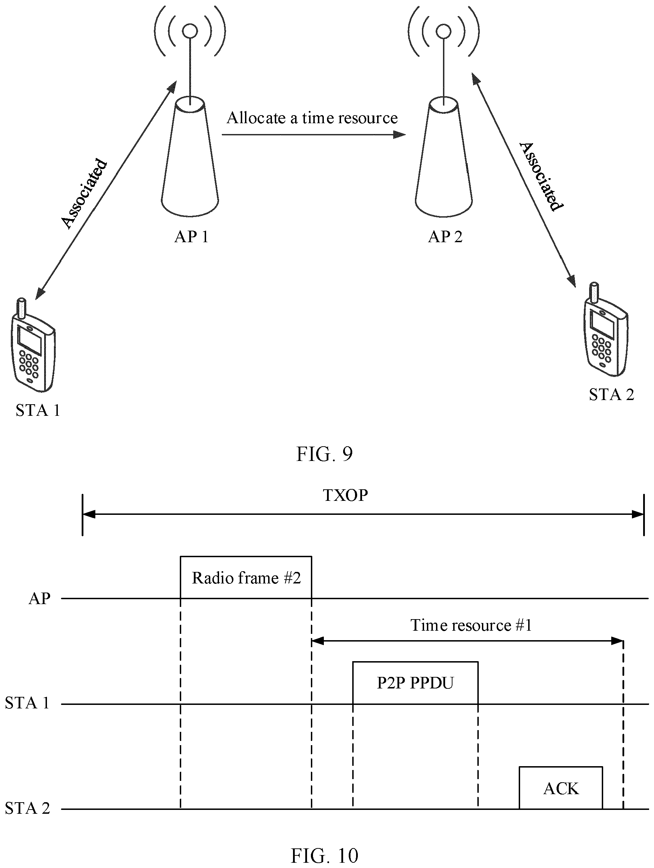

For example, FIG. 9 is a schematic diagram of a CO-TDMA scenario. As shown in FIG. 9, an AP 1 is associated with a STA 1, and an AP 2 is associated with a STA 2. After the AP 1 obtains a TXOP, the AP 1 may allocate a time resource of the TXOP to the AP 2. Therefore, the AP 2 may communicate with the STA 2 on the time resource.

To support time resource allocation in the scheduled P2P scenario and the CO-TDMA scenario, this application provides a radio frame #2. The radio frame #2 is used to allocate the time resource.

For example, FIG. 10 is a schematic diagram of applying the radio frame #2 to the scheduled P2P scenario. As shown in FIG. 10, in a TXOP obtained by an AP, the AP sends the radio frame #2 to the STA 1, and the radio frame #2 allocates a time resource #1 to the STA 1. Therefore, on the time resource #1, the STA 1 may send a PPDU to the STA 2, and the STA 2 may send an ACK frame of the PPDU to the STA 1.

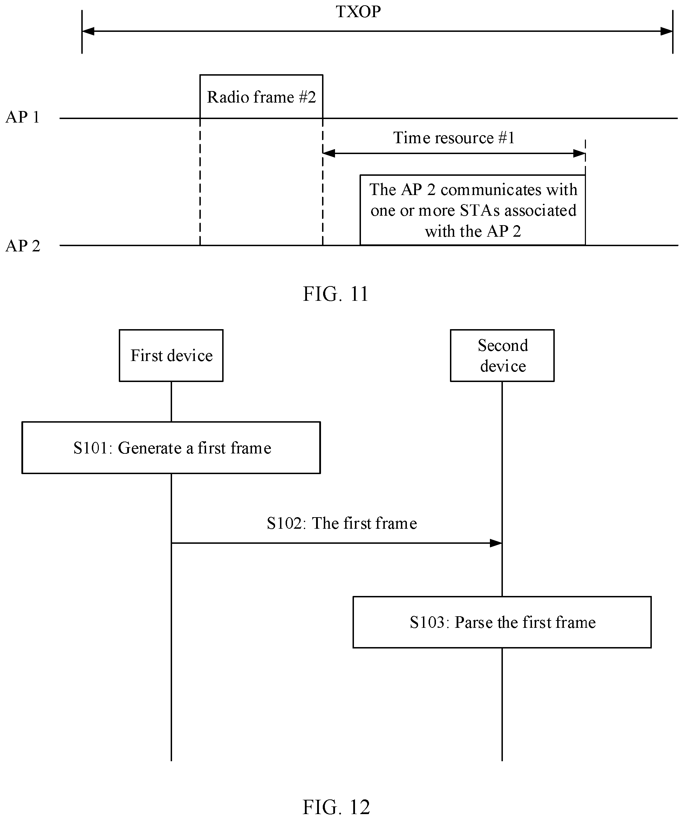

For example, FIG. 11 is a schematic diagram of applying the radio frame #2 to the CO-TDMA scenario. As shown in FIG. 11, the AP 1 is a TXOP and is an owner. In the TXOP, the AP 1 may send one radio frame #2 to the AP 2, to allocate a time resource #1 to the AP 2. On the time resource #1, the AP 2 communicates with one or more STAs associated with the AP 2.

Currently, the radio frame #1 applied to the multi-link scenario and the radio frame #2 applied to the scheduled P2P scenario or the CO-TDMA scenario are not interchangeable. Therefore, to enable a device to identify whether a radio frame is the radio frame #1 or the radio frame #2, the radio frame #1 and the radio frame #2 need to have respective frame types, resulting in a complex communication protocol.

To resolve this technical problem, an embodiment of this application provides a first frame. The first frame includes a first field and a second field. The first field indicates a duration of a first time resource. The second field indicates a purpose of the first time resource. The time resource may have another name, for example, a time period, a time domain resource, or time. This is not limited in embodiments of this application.

It should be understood that the first field is different from a duration field further included in the first frame. The duration field is used to predetermine a period of use time of a medium.

For example, the first field may have another name, for example, an assigned time duration field, and the second field may have another name, for example, an assigned type (assigned type) field. This is not limited in embodiments of this application.

Optionally, the purpose of the first time resource includes:
Purpose 1: The first time resource is used to transmit a single-user PPDU.

Optionally, the duration of the first time resource may be a length of the single-user PPDU.

Optionally, the duration of the first time resource may be equal to a sum of a length of the single-user PPDU, an inter-frame space (SIFS), and a length of a legacy physical layer preamble.

It should be understood that, when the purpose of the first time resource is the purpose 1, it indicates that the first frame is applied to a first-type scenario. The first-type scenario includes but is not limited to the multi-link scenario.

Purpose 2: The first time resource is used to perform frame exchange.

Based on the purpose 2, start time of the first time resource is time at which the receiver receives the first frame.

It should be understood that, when the purpose of the first time resource is the purpose 2, it indicates that the first frame is applied to a second-type scenario. The second-type scenario includes but is not limited to the scheduled P2P scenario or the CO-TDMA scenario.

In a possible design, that the second field indicates the purpose of the first time resource includes one of the following cases:
Case 1-1: When a value of the second field is a first preset value, the second field indicates that the first time resource is used to transmit the single-user PPDU.
Case 1-2: When a value of the second field is a second preset value, the second field indicates that the first time resource is used to perform frame exchange.

For example, the second field occupies one bit, the first preset value may be 0, and the second preset value may be 1.

In another possible design, that the second field indicates the purpose of the first time resource includes one of the following cases:
Case 2-1: When a value of the second field is a first preset value, the second field indicates that the first time resource is used to transmit the single-user PPDU.
Case 2-2: When a value of the second field is a second preset value, the second field indicates that the first time resource is used by a cooperation device to perform frame exchange.

The cooperation device and a first device do not belong to a same BSS. For example, the cooperation device may be a shared AP in the CO-TDMA scenario.

Case 2-3: When a value of the second field is a third preset value, the second field indicates that the first time resource is used by a P2P station to perform frame exchange.

For example, the second field occupies two bits, the first preset value is 0, the second preset value is 1, and the third preset value is 2.

The following describes a design manner of the first frame. It should be understood that the first frame may use any one of the following design manners.

Design manner 1: The first frame is a new type of trigger frame. To be specific, the first frame includes a trigger type field whose value is a first value, and the first value is any one of 8 to 15.

Design manner 2: The first frame is improved based on a basic trigger frame. To be specific, the first frame includes a trigger type field whose value is 0. In addition, a B63 bit of the first frame is set to 1, to indicate that the basic trigger frame is the first frame.

It should be understood that the B63 bit of the basic trigger frame in the current standard is a reserved bit.

Optionally, based on the design manner 1 or the design manner 2, the first field and the second field may be located in a common information field or a user information field of the first frame.

For example, when the first field and the second field are located in the common information field of the first frame, the first field may be a UL length field, and the second field may reuse another field other than the UL length field in the common information field.

Design manner 3: A first trigger frame includes an A-control field that uses a new control type. To be specific, the first frame includes an A-control field, a value of a control identifier field in the A-control field is a second value, and the second value is any one of 7 to 14.

Based on the design manner 3, the first field and the second field may be located in a control information field of the A-control field.

Design manner 4: The first frame is improved based on a TRS control type in an existing A-control field.

Specifically, the first frame is a radio frame that carries the A-control field. A value of a control ID field in the A-control field is 0, and the A-control field includes a TRS control field. A B25 bit in the TRS control field is set to 1, and all or some of B0 to B24 bits in the TRS control field are used to carry the first field and the second field.

The foregoing describes the first frame provided in embodiments of this application. A general description is provided herein, and details are not described below again.

FIG. 12 shows a communication method according to an embodiment of this application. The method includes the following steps.

S101: A first device generates a first frame.

The first device may be an AP or a STA.

It should be understood that the first device may determine a duration of a first time resource based on an actual situation. For example, the first device may determine the duration of the first time resource based on buffer status information reported by a second device.

S102: The first device sends the first frame to the second device. Correspondingly, the second device receives a trigger frame sent by the first device.

S103: The second device parses the first frame.

Optionally, after the second device parses the first frame, the second device uses, based on a second field in the first frame, the first time resource indicated by a first field.

For example, the second device determines, based on the second field in the first frame, that the first time resource is used to transmit a single-user PPDU. In this case, the second device sends the single-user PPDU to the first device.

For example, the second device determines, based on the second field in the first frame, that the first time resource is used to perform frame exchange. If the second device is an AP, the second device performs, according to a CO-TDMA mechanism and on the first time resource, frame exchange with another device associated with the second device. If the second device is a STA, the second device performs frame exchange with another P2P station according to a scheduled P2P mechanism.

Based on the technical solution shown in FIG. 12, the first frame includes the first field and the second field. The first field indicates the duration of the first time resource. The second field may indicate that the first time resource is used to transmit the single-user PPDU. Alternatively, the second field indicates that the first time resource is used to perform frame exchange. The first frame may be applied to a scenario that has different purposes for a time resource, so that the first frame is universal.

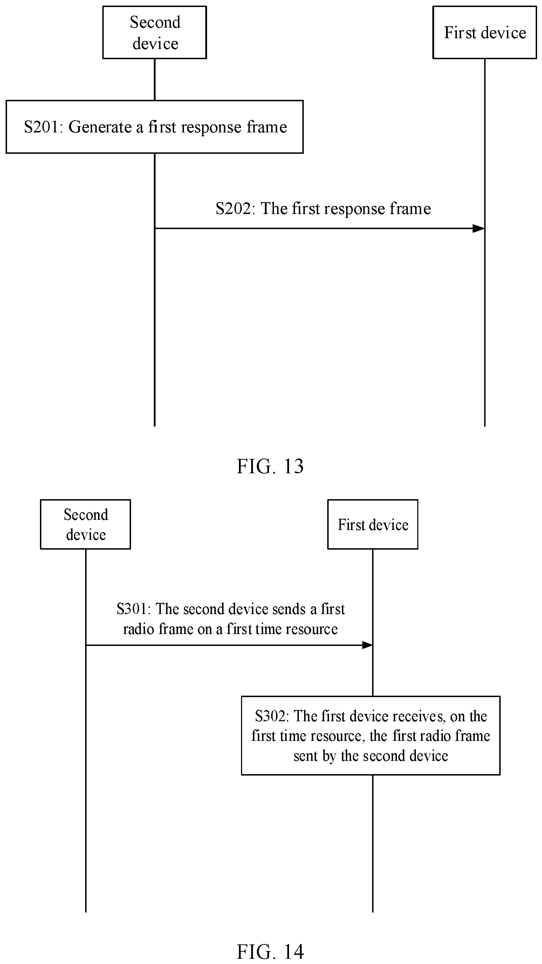

Optionally, after the second device receives the first frame, the second device may feed back a first response frame by using an embodiment shown in FIG. 13. FIG. 13 is a flowchart of a communication method according to an embodiment of this application. As shown in FIG. 13, the communication method includes the following steps.

S201: The second device generates the first response frame.

The first response frame includes a third field. The third field indicates that the second device accepts or rejects the first time resource. In other words, the third field indicates whether the second device accepts the first time resource.

In an example, when the third field is set to 0, the third field indicates that the second device accepts the first time resource. Alternatively, when the third field is set to 1, the third field indicates that the second device rejects the first time resource.

In another example, when the third field is set to 1, the third field indicates that the second device accepts the first time resource. Alternatively, when the third field is set to 0, the third field indicates that the second device rejects the first time resource.

S202. The second device sends the first response frame to the first device. Correspondingly, the first device receives the first response frame sent by the second device.

It should be understood that, after receiving the first response frame, the first device may learn that the second device correctly receives the first frame. Correspondingly, if the first device does not receive the first response frame, the first device may determine that the second device does not correctly receive the first frame.

Based on the embodiment shown in FIG. 13, on one hand, the first device may learn, based on whether the first response frame is received, whether the second device correctly receives the first frame. On the other hand, the first device may determine, based on the third field in the first response frame, whether the second device accepts the first time resource, so that when the second device rejects the first time resource, the first device may allocate the first time resource to another device again, thereby avoiding a waste of time resources.

Optionally, when the second field in the first frame indicates that the first time resource is used to perform frame exchange, after the second device receives the first frame, the second device may not feed back a response frame to the first device, but directly perform frame exchange with another device. In this case, the second device may use an embodiment shown in FIG. 14, so that the first device learns that the second device accepts the first time resource allocated by the first device.

FIG. 14 shows a communication method according to an embodiment of this application. The method includes the following steps.

S301: The second device sends a first radio frame on the first time resource.

Optionally, a receiver address of the radio frame is not a MAC address of the first device.

In this embodiment of this application, a frame format used by the first radio frame sent by the second device is a frame format that can be supported by the first device. In addition, a physical layer parameter used to send the radio frame is a physical layer parameter that can be supported by the first device.

For example, the physical layer parameter includes but is not limited to a number of spatial streams and an MCS.

Optionally, the MCS used to send the radio frame is less than or equal to a first MCS, and the first MCS is a maximum MCS supported by the first device.

Optionally, the MCS used to send the radio frame is less than or equal to a target MCS. The target MCS is a smaller value in a first MCS and a second MCS. The second MCS is a maximum MCS that is expected to be parsed by the first device in a current channel condition.

S302: The first device receives, on the first time resource, the first radio frame sent by the second device.

Based on the embodiment shown in FIG. 14, because a parsing capability of the first device is considered in both the frame format and the physical layer parameter that are used by the second device to send the first radio frame on the first time resource, the first device may parse the radio frame, to learn that the second device accepts the first time resource.

Optionally, if the first device does not receive, within a preset duration, the radio frame sent by the second device, the first device may determine that the second device does not correctly receive the first frame, or the first device may determine that the second device rejects the first time resource indicated by the first field in the first frame. In this case, the first device may allocate the time resource to another device.

It should be understood that the parsing capability of the first device may not be considered for another radio frame (for example, a second radio frame or a third radio frame) other than the first radio frame sent by the second device on the first time resource. In other words, a frame format used by the another radio frame may not be the frame format that can be supported by the first device, and a physical layer parameter used to send the another radio frame may not be the physical layer parameter that can be supported by the first device.

An existing standard supports a reverse direction grant (reverse direction grant, RDG) mechanism. In the RDG mechanism, an RDG initiator (initiator) may transfer a remaining time of a TXOP held by the RDG initiator to an RDG responder (responder). Then, the RDG responder communicates with the RDG initiator by using a single-user PPDU. Alternatively, the RDG responder communicates with a plurality of devices by using a downlink multi-user PPDU or the trigger frame. The plurality of devices need to include the RDG initiator.

Based on the RDG mechanism, a transmitter may send RDG indication information to a receiver, so that the receiver learns whether the transmitter transfers a remaining time of a TXOP held by the transmitter to the receiver. It should be understood that, when the transmitter transfers the remaining time of the TXOP held by the transmitter to the receiver, the transmitter is the RDG initiator, and the receiver is the RDG responder.

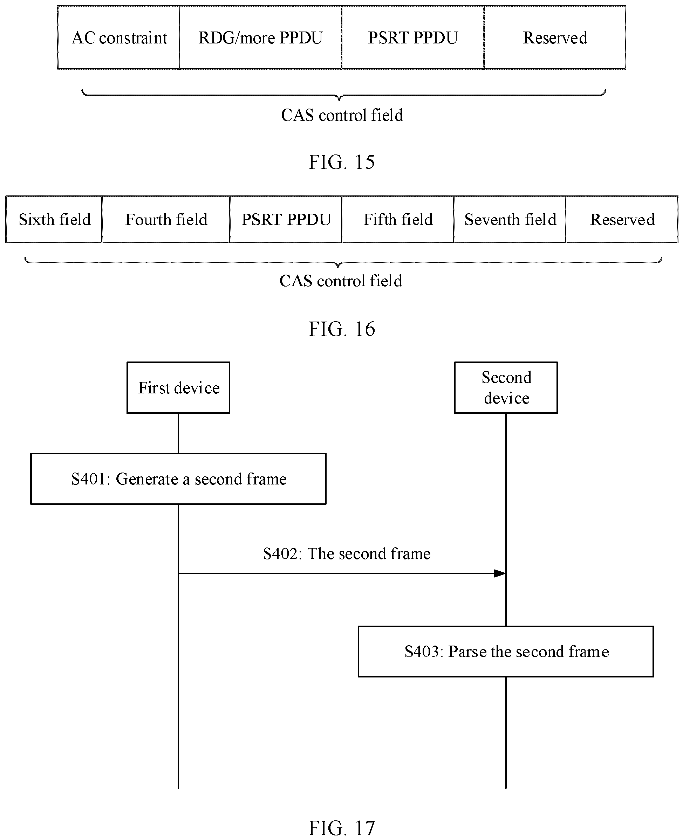

Currently, the RDG indication information is carried in a CAS control field in an A-control field. As shown in FIG. 15, an existing CAS control field includes an AC constraint (constraint) field, an RDG/more PPDU field, a parameterized spatial reuse transmission (parameterized spatial reuse transmission, PSRT) PPDU field, and five reserved bits. The AC constraint field, the RDG/more PPDU field, and the PSRT PPDU field each occupy one bit.

The RDG/more PPDU field is used as the RDG indication information. Specifically, when the RDG/more PPDU field is set to 1, it indicates that the transmitter transfers the remaining time of the TXOP held by the transmitter to the receiver. When the RDG/more PPDU field is set to 0, it indicates that the transmitter does not transfer the remaining time of the TXOP held by the transmitter to the receiver.

The AC constraint field indicates whether there is a limitation on a type of a data frame sent by the RDG responder within the remaining time of the TXOP. Specifically, when the AC constraint field is set to 0, it indicates that there is no limitation on the type of the data frame sent by the RDG responder within the remaining time of the TXOP. When the AC constraint field is set to 1, it indicates that there is a limitation on the type of the data frame sent by the RDG responder within the remaining time of the TXOP.

That there is a limitation on the type of the data frame sent by the RDG responder specifically means that the RDG responder can send only data of a primary access category (access category, AC) corresponding to the TXOP.

The PSRT PPDU field indicates that a current PPDU is a spatial reuse PPDU sent when a parameterized spatial reuse transmission condition is met.

The IEEE802.11be standard may further support the scheduled P2P mechanism and the CO-TDMA mechanism. In a scheduled P2P scenario, a first AP may also need to transfer a remaining time of a TXOP held by the first AP to a STA associated with the first AP. In a CO-TDMA scenario, a first AP may also need to transfer a remaining time of a TXOP held by the first AP to a second AP.

However, the RDG mechanism is not applicable to some other application scenarios (for example, the scheduled P2P scenario or the CO-TDMA scenario). The reason is as follows: Based on the RDG mechanism, the RDG responder needs to communicate with the RDG initiator when accepting the remaining time of the TXOP. However, in the scheduled P2P scenario or the CO-TDMA scenario, a device that accepts the remaining time of the TXOP communicates with another device, and the another device does not include a holder of the TXOP.

If a new type of radio frame is provided for the foregoing scheduled P2P scenario or CO-TDMA scenario, a communication protocol is complex.

Therefore, to avoid the complex communication protocol, this embodiment of this application provides a second frame. The second frame includes an A-control field. The A-control field includes a CAS control field. The CAS control field includes a fourth field and a fifth field.

Optionally, the second frame is a data frame, for example, a quality of service (quality of service, QoS) frame or a QoS null (null) frame.

The fourth field indicates whether to transfer the remaining time of the TXOP to the second device, so that the second device communicates with the first device within the remaining time of the TXOP. In other words, the fourth field indicates whether to transfer the remaining time of the TXOP to the RDG responder.

It should be understood that the fourth field may have another name, for example, an RDG/more PPDU field.

Optionally, when the fourth field is set to a fourth preset value, the fourth field indicates to transfer the remaining time of the TXOP to the second device, so that the second device communicates with the first device within the remaining time of the TXOP. When the fourth field is set to a fifth preset value, the fourth field indicates not to transfer the remaining time of the TXOP to the second device. The fourth preset value is different from the fifth preset value.

It should be understood that: that the second device communicates with the first device within the remaining time of the TXOP may be that: The second device communicates, within the remaining time of the TXOP, with the first device by using the single-user PPDU. Alternatively, the second device communicates, by using the downlink multi-user PPDU or the trigger frame within the remaining time of the TXOP, with a plurality of devices including the first device.

Values of the fourth preset value and the fifth preset value are not limited in this embodiment of this application. For example, the fourth preset value is 1, and the fifth preset value is 0.

The fifth field indicates whether to transfer the remaining time of the TXOP to the second device, so that the second device communicates with a third device within the remaining time of the TXOP. The third device does not include the first device. In other words, the fifth field indicates whether to transfer the remaining time of the TXOP to a cooperation device or a P2P STA.

Optionally, when the fifth field is set to a fourth preset value, the fifth field indicates to transfer the remaining time of the TXOP to the second device, so that the second device communicates with a third device within the remaining time of the TXOP. When the fifth field is set to a fifth preset value, the fifth field indicates not to transfer the remaining time of the TXOP to the second device.

There may be one or more third devices.

It should be understood that when the fifth field indicates to transfer the remaining time of the TXOP to the second device, so that the second device communicates with the third device within the remaining time of the TXOP, the second device does not communicate with the first device within the remaining time of the TXOP.

It should be understood that the fifth field may have another name, for example, a time sharing (time sharing) field.

In this embodiment of this application, the fourth field and the fifth field cannot be both set to the fourth preset value.

It should be noted that the second frame further includes a duration field. The duration field may be used to determine a duration of the remaining time of the TXOP.

Optionally, the CAS control field further includes a sixth field. The sixth field indicates whether there is a limitation on a type of a data frame sent by the second device within the remaining time of the TXOP. Specifically, when the sixth field is set to 0, the sixth field indicates that there is no limitation on the type of the data frame sent by the second device within the remaining time of the TXOP. When the sixth field is set to 1, the sixth field indicates that there is a limitation on the type of the data frame sent by the second device within the remaining time of the TXOP.

It should be understood that the sixth field may have another name, for example, an AC constraint field.

Optionally, the CAS control field further includes a seventh field. The seventh field indicates whether the second device is allowed to transfer the remaining time of the TXOP to another device. Specifically, when the seventh field is set to a sixth preset value, the seventh field indicates that the second device is not allowed to transfer the remaining time of the TXOP to the another device. When the seventh field is set to a seventh preset value, the seventh field indicates that the second device is allowed to transfer the remaining time of the TXOP to the another device.

It should be understood that the seventh field may have another name, for example, a further grant field.

Optionally, in addition to the foregoing fields, the CAS control field may further include another field, for example, a PSRT PPDU field.

For example, FIG. 16 is a schematic diagram of a CAS control field in the second frame according to an embodiment of this application. The CAS control field may include a fourth field, a fifth field, a sixth field, a seventh field, a PSRT PPDU field, and three reserved bits. The fourth field, the fifth field, the sixth field, the seventh field, and the PSRT PPDU field each occupy one bit.

FIG. 17 shows a communication method according to an embodiment of this application. The method includes the following steps.

S401: A first device generates a second frame.

S402: The first device sends the second frame to a second device. Correspondingly, the second device receives the second frame sent by the first device.

S403: The second device parses the second frame.

When a fourth field in a CAS control field of the second frame is set to a fourth preset value, the second device communicates with the first device within a remaining time of a TXOP. Alternatively, when a fifth field in a CAS control field of the second frame is set to a fifth preset value, the second device communicates with a third device within a remaining time of a TXOP.

It should be understood that the third device may be determined based on a specific application scenario.

For example, in a CO-TDMA scenario, the third device may be a station associated with the second device.

For example, in a scheduled P2P scenario, the third device may be a station that establishes a P2P link with the second device.

Based on the embodiment shown in FIG. 17, the second frame carries the CAS control field. The CAS control field includes the fourth field and the fifth field. The fourth field indicates to transfer the remaining time of the TXOP to the second device, so that the second device communicates with the first device within the remaining time of the TXOP. The fifth field indicates whether to transfer the remaining time of the TXOP to the second device, so that the second device communicates with the third device within the remaining time of the TXOP. The third device does not include the first device. Therefore, based on the fourth field and the fifth field, the second frame may be applied to an application scenario in which the remaining time of the TXOP is differently arranged, for example, a scenario to which an RDG mechanism is applied, the scheduled P2P scenario, or the CO-TDMA scenario. Therefore, the second frame is universal.

For ease of description, the remaining time of the TXOP transferred by the first device to the second device by using the second frame may be briefly referred to as a second time resource. After the second device uses the second time resource, a remaining time of the second time resource may be briefly referred to as a third time resource.

Optionally, the second device may return the third time resource to the first device by using any one of the following operations:
Operation 1: The second device sends, to the first device, the second frame that carries the CAS control field. The fifth field in the CAS control field is set to the fifth preset value.
Operation 2: The second device sends, to the first device, a radio frame that does not carry the CAS control field.

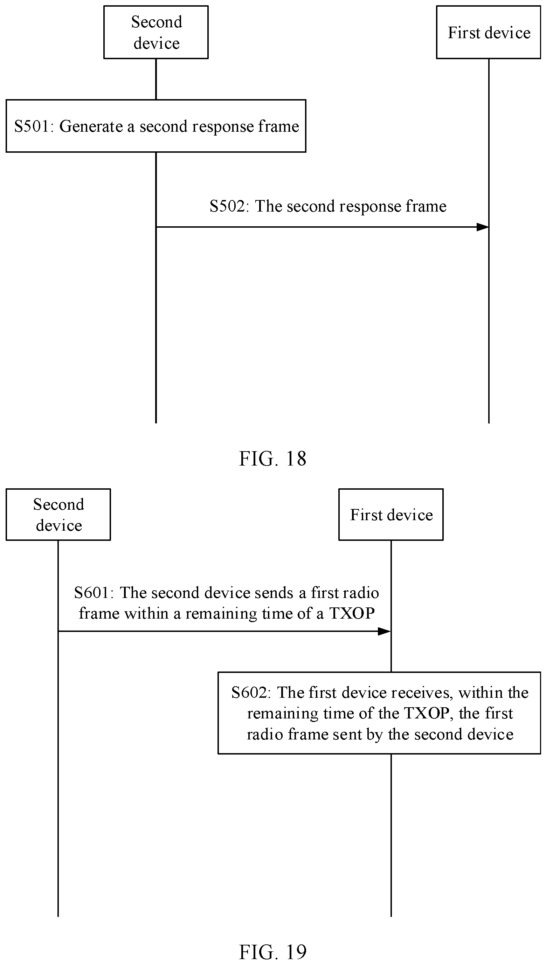

Optionally, after the second device receives the second frame, the second device may feed back a second response frame by using the embodiment shown in FIG. 18. FIG. 18 is a flowchart of a communication method according to an embodiment of this application. As shown in FIG. 18, the communication method includes the following steps.

S501: The second device generates the second response frame.

The second response frame is used to respond to the second frame. The second response frame includes an eighth field. The eighth field indicates whether the second device accepts the remaining time of the TXOP.

In an example, when the eighth field is set to 0, the eighth field indicates that the second device accepts the remaining time of the TXOP. Alternatively, when the eighth field is set to 1, the eighth field indicates that the second device rejects the remaining time of the TXOP.

In another example, when the eighth field is set to 1, the eighth field indicates that the second device accepts the remaining time of the TXOP. Alternatively, when the eighth field is set to 0, the eighth field indicates that the second device rejects the remaining time of the TXOP.

S502: The second device sends the second response frame to the first device. Correspondingly, the first device receives the second response frame sent by the second device.

Based on the embodiment shown in FIG. 18, on one hand, the first device may learn, based on whether the second response frame is received, whether the second device correctly receives the second frame. On the other hand, the first device may determine, based on the eighth field in the second response frame, whether the second device accepts the remaining time of the TXOP, so that when the second device rejects the remaining time of the TXOP, the first device may allocate the remaining time of the TXOP to another device again, thereby avoiding a waste of time resources.

Optionally, when the fifth field in the second frame is set to the fourth preset value, after the second device receives the second frame, the second device may not feed back a response frame to the first device, but directly perform frame exchange with another device. In this case, the second device uses the embodiment shown in FIG. 19, so that the first device learns that the second device accepts the remaining time of the TXOP allocated by the first device.

S601: The second device sends a first radio frame within the remaining time of the TXOP.

Optionally, a receiver address of the radio frame is not a MAC address of the first device.

In this embodiment of this application, a frame format used by the first radio frame sent by the second device is a frame format that can be supported by the first device. In addition, a physical layer parameter used to send the radio frame is a physical layer parameter that can be supported by the first device.

For example, the physical layer parameter includes but is not limited to a number of spatial streams and an MCS.

Optionally, the MCS used to send the radio frame is less than or equal to a first MCS, and the first MCS is a maximum MCS supported by the first device.

S602: The first device receives, within the remaining time of the TXOP, the first radio frame sent by the second device.

Based on the embodiment shown in FIG. 19, because a parsing capability of the first device is considered in both the frame format and the physical layer parameter that are used by the second device to send the first radio frame within the remaining time of the TXOP, the first device may parse the radio frame, to learn that the second device accepts the remaining time of the TXOP.

Optionally, if the first device does not receive, within a preset duration, the radio frame sent by the second device, the first device may determine that the second device does not correctly receive the second frame, or the first device may determine that the second device rejects the remaining time of the TXOP. In this case, the first device may transfer the remaining time of the TXOP to another device.

It should be understood that the parsing capability of the first device may not be considered for another radio frame (for example, a second radio frame or a third radio frame) other than the first radio frame sent by the second device within the remaining time of the TXOP. In other words, a frame format used by the another radio frame may not be the frame format that can be supported by the first device, and a physical layer parameter used to send the another radio frame may not be the physical layer parameter that can be supported by the first device.

In some application scenarios (for example, the scheduled P2P scenario or the CO-TDMA scenario), the second device needs to report buffer status information to the first device in advance, to assist the first device in allocating the time resource to the second device.

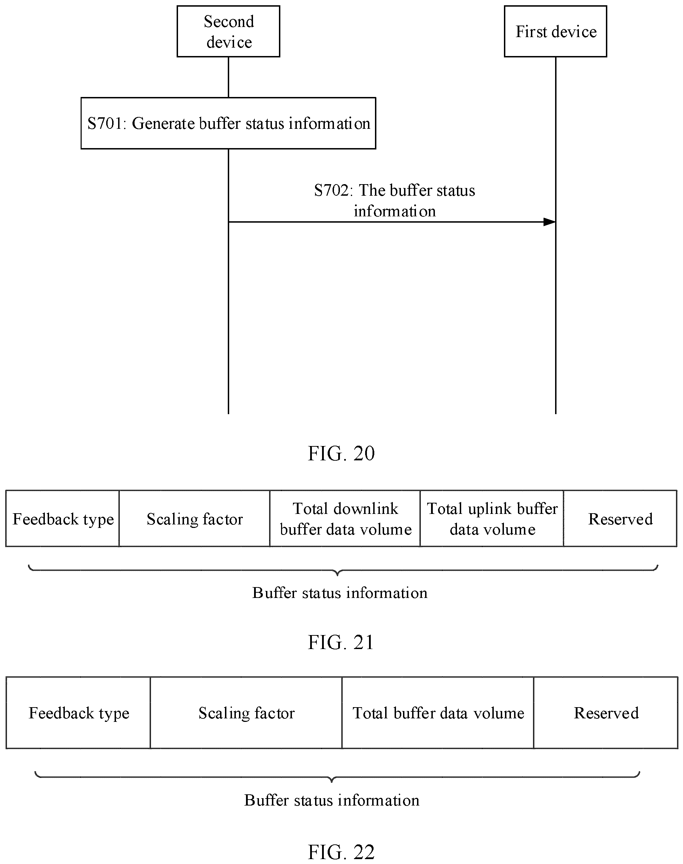

Based on this, FIG. 20 shows a communication method according to an embodiment of this application. The communication method includes the following steps.

S701: A second device generates buffer status information.

The buffer status information indicates a buffer data amount.

When the second device is a cooperation device, the buffer data amount may be one or more of the following: a total uplink buffer data amount, a total downlink buffer data amount, or a sum of the total uplink buffer data amount and the total downlink buffer data amount.

The total uplink buffer data amount is a sum of data amounts to be sent by all target stations to the second device. The total downlink buffer data amount is a sum of data amounts to be sent by the second device to all target stations.

Optionally, a target station is one of the following cases:
(1) The target station is any station associated with the second device.
   To be specific, when the second device communicates, on an allocated time resource, with the station associated with the second device, there is no location limitation on selection of the associated station.
(2) The target station is a station associated with the second device, and the target station is a station that receives capability indication information. The capability indication information indicates that the station participates in CO-TDMA.
(3) The target station is a station associated with the second device, and the target station meets a selection condition of the second device. The selection condition of the second device includes a location, channel state information, and the like. For example, the selection condition of the second device in terms of the location is that a distance between the target station and the second device is less than or equal to a first preset value.

When the second device is a P2P STA, the buffer data amount may be a sum of buffer data amounts on K P2P links established by the second device. K is a positive integer. Alternatively, the buffer data amount may be a buffer data amount on a P2P link, and the buffer status information may further include an identifier of the P2P link.

In a possible design, when an access category (access category, AC) or a traffic identifier (traffic identifier, TID) of buffer data is not considered, the buffer data amount indicated by the buffer status information is a sum of buffer data amounts of all ACs or all TIDs.

In another possible design, when an access category (access category, AC) or a traffic identifier (traffic identifier, TID) of the buffer data is considered, the buffer status information indicating the buffer data amount may include the following implementations:
Implementation 1: The buffer status information indicates a buffer data amount corresponding to one or more ACs. Alternatively, the buffer status information may indicate a buffer data amount corresponding to one or more TIDs.
   For example, the buffer status information may include a plurality of information elements. Each information element is used to carry an identifier of one AC and a buffer data amount corresponding to the AC. Alternatively, each information element is used to carry an identifier of one TID and a buffer data amount corresponding to the TID.
Implementation 2: The buffer status information indicates a buffer data amount corresponding to a primary AC.
   It should be understood that, in a current EDCA, there is one buffer queue and one backoff counter for each AC. After a corresponding backoff counter backs off to 0, data of the AC may be sent. Correspondingly, an AC that obtains a TXOP through contention is referred to as a primary AC of the TXOP.
Implementation 3: The buffer status information indicates a buffer data amount corresponding to an AC combination. Alternatively, the buffer status information indicates a buffer data amount corresponding to a TID combination.

The AC combination includes one or more ACs. Correspondingly, the buffer data amount corresponding to the AC combination is a sum of buffer data amounts corresponding to all ACs in the AC combination. For example, an AC combination 1 includes an AC 1 and an AC 2, and a buffer data amount corresponding to the AC combination 1 is a sum of a buffer data amount corresponding to the AC 1 and a buffer data amount corresponding to the AC 2.

The TID combination includes one or more TIDs. Correspondingly, the buffer data amount corresponding to the TID combination is a sum of buffer data amounts corresponding to all TIDs in the TID combination. For example, a TID combination 1 includes a TID 1 and a TID 2, and a buffer data amount corresponding to the TID combination 1 is a sum of a buffer data amount corresponding to the TID 1 and a buffer data amount corresponding to the TID 2.

S702: The second device sends the buffer status information to a first device. Correspondingly, the first device receives the buffer status information sent by the second device.

It should be understood that the buffer status information may be carried in a radio frame.

Optionally, in a scheduled P2P scenario, the radio frame includes an A-control field. The A-control field includes the buffer status information. It should be understood that in this case, a value of a control ID field in the A-control field is 3, and a buffer status report field in the A-control field is equivalent to the buffer status information.

Optionally, in a CO-TDMA scenario, the radio frame that carries the buffer status information is a public action (Public Action) frame.

For example, in the CO-TDMA scenario, the buffer status information may use a frame structure shown in FIG. 21 or FIG. 22.

As shown in FIG. 21, the buffer status information may include a feedback type (Report Type) field, a scaling factor (scaling factor) field, a total downlink buffer data amount field, a total uplink buffer data amount field, and a reserved bit.

The scaling factor field indicates a scaling factor. It should be understood that, in the frame structure shown in FIG. 21, a product of the scaling factor indicated by the scaling factor field and a data amount indicated by the total downlink buffer data amount field is the total downlink buffer data amount. A product of the scaling factor indicated by the scaling factor field and a data amount indicated by the total uplink buffer data amount field is the total uplink buffer data amount. In this way, the scaling factor field is set in the buffer status information, so that a small number of bits can be used to indicate that a data amount falls within a large value range.

It should be understood that, in the frame structure shown in FIG. 21, the scaling factor is an optional field. If the buffer status information does not include the scaling factor field, the total downlink buffer data amount field indicates the total downlink buffer data amount, and the total uplink buffer data amount field indicates the total uplink buffer data amount.

The total downlink buffer data amount field may further have another name, for example, a BSS downlink queue size (queue size BSS DL) field. The total uplink buffer data amount field may further have another name, for example, a BSS uplink queue size (queue size BSS UL) field.

As shown in FIG. 22, the buffer status information may include a feedback type field, a scaling factor field, a total buffer data amount field, and a reserved bit.

In the frame structure shown in FIG. 22, a product of a scaling factor indicated by the scaling factor field and a data amount indicated by the total buffer data amount field is the sum of the total uplink buffer data amount and the total downlink buffer data amount.

It should be understood that, in the frame structure shown in FIG. 22, the scaling factor is an optional field. If the buffer status information does not include the scaling factor field, the total buffer data amount field indicates the sum of the total uplink buffer data amount and the total downlink buffer data amount.

The total buffer data amount field may have another name, for example, a queue size BSS DL + UL field.

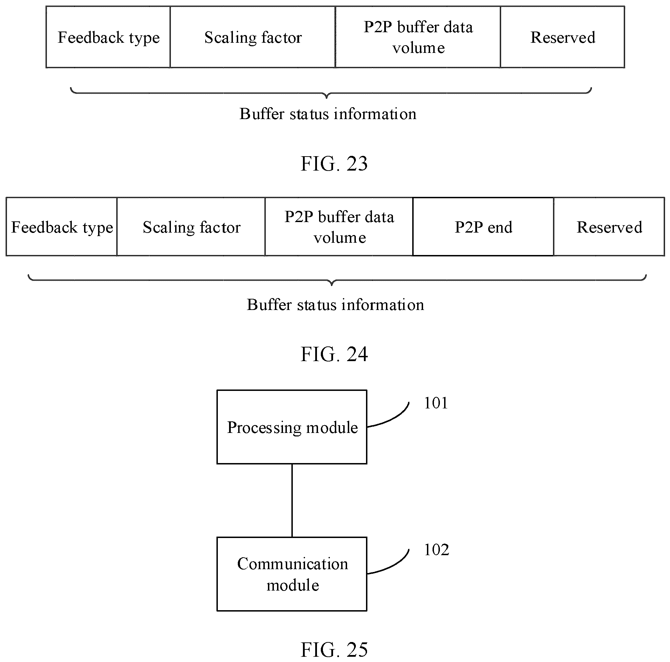

For example, in the scheduled P2P scenario, the buffer status information may use a frame structure shown in FIG. 23 or FIG. 24.

As shown in FIG. 23, the buffer status information includes a report type field, a scaling factor field, a P2P buffer data amount field, and a reserved bit.

It should be understood that a product of a scaling factor indicated by the scaling factor field and a data amount indicated by the P2P buffer data amount field is the sum of the buffer data amounts on the K P2P links established by the second device.

It should be understood that, in the frame structure shown in FIG. 23, the scaling factor is an optional field. If the buffer status information does not include the scaling factor field, the P2P buffer data amount field indicates the sum of the buffer data amounts on the K P2P links established by the second device.

As shown in FIG. 24, the buffer status information includes a report type field, a scaling factor field, a P2P buffer data amount field, a P2P end field, and a reserved bit.

It should be understood that the P2P end field is used in an identifier of a P2P link. A product of a scaling factor indicated by the scaling factor field and a data amount indicated by the P2P buffer data amount field is a sum of buffer data that is on P2P links and that is indicated by the P2P end field.

It should be understood that, in the frame structure shown in FIG. 24, the scaling factor is an optional field.

Optionally, in the frame structures shown in FIG. 21 to FIG. 24, the reserved bit is optional. In other words, the buffer status information may not include the reserved bit.

Optionally, in the frame structures shown in FIG. 21 to FIG. 24, the feedback type field indicates a feedback type, and the feedback type includes a first feedback type and a second feedback type. The first feedback type indicates that the buffer status information is used in a multi-AP cooperation scenario. The second feedback type indicates that the buffer status information is used in a P2P scenario.

It should be understood that the multi-AP cooperation scenario includes the CO-TDMA scenario.

For example, in a communication protocol, the first feedback type may be denoted as a plurality of APs, and the second feedback type may be denoted as a P2P.

Optionally, in the frame structures shown in FIG. 21 to FIG. 24, the feedback type field is an optional field.

When the buffer status information does not include the feedback type field, the first device may learn the feedback type of the buffer status information in any one of the following manners:
Manner 1: The first device determines the feedback type of the buffer status information based on a role of the second device. For example, when the second device is an AP, the first device may determine that the feedback type of the buffer status information is the first feedback type. When the second device is a STA, the first device may determine that the feedback type of the buffer status information is the second feedback type.
Manner 2: The first device may determine the feedback type of the buffer status information based on the frame type of the radio frame that carries the buffer status information. For example, when the frame type of the radio frame that carries the buffer status information is the first frame type, the first device may determine that the feedback type of the buffer status information is the first feedback type. When the frame type of the radio frame that carries the buffer status information is the second frame type, the first device may determine that the feedback type of the buffer status information is the second feedback type.

Based on the embodiment shown in FIG. 20, the second device sends the buffer status information to the first device, so that the first device learns of the buffer data amount related to the second device. Further, the first device may properly allocate a time resource to the second device, so that buffer data related to the second device can be transmitted within the allocated time resource.

It should be understood that the embodiment shown in FIG. 20 may be combined with the foregoing embodiment shown in FIG. 12 or FIG. 17.

The foregoing mainly describes the solutions provided in embodiments of this application from a perspective of a communication apparatus (for example, the first device or the second device). It may be understood that, to implement the foregoing functions, the communication apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that this implementation goes beyond the scope of this application.

In embodiments of this application, the apparatus may be divided into functional modules based on the foregoing method examples. For example, each functional module may be obtained through division based on each corresponding function, or two or more functions may be integrated into one functional module. The integrated module may be implemented in a form of hardware, or may be implemented in a form of a software functional module. In this embodiment of this application, module division is an example, and is merely a logical function division. During actual implementation, another division manner may be used. An example in which each functional module is obtained through division based on each corresponding function is used below for description.

FIG. 25 shows a communication apparatus according to an embodiment of this application. The communication apparatus includes a processing module 101 and a communication module 102.

In a possible design, when the communication apparatus serves as a first device, the processing module 101 is configured to perform the step S101 in FIG. 12 and/or the step S401 in FIG. 17. The communication module 102 is configured to perform the step S102 in FIG. 12, the step S202 in FIG. 13, the step S302 in FIG. 14, the step S402 in FIG. 17, the step S502 in FIG. 18, the step S602 in FIG. 19, and/or the step S702 in FIG. 20.

In another possible design, when the communication apparatus serves as a second device, the processing module 101 is configured to perform the step S103 in FIG. 12, the step S201 in FIG. 13, the step S403 in FIG. 17, the step S501 in FIG. 18, and/or the step S701 in FIG. 20. The communication module 102 is configured to perform the step S102 in FIG. 12, the step S202 in FIG. 13, the step S301 in FIG. 14, the step S402 in FIG. 17, the step S502 in FIG. 18, the step S601 in FIG. 19, and/or the step S702 in FIG. 20.

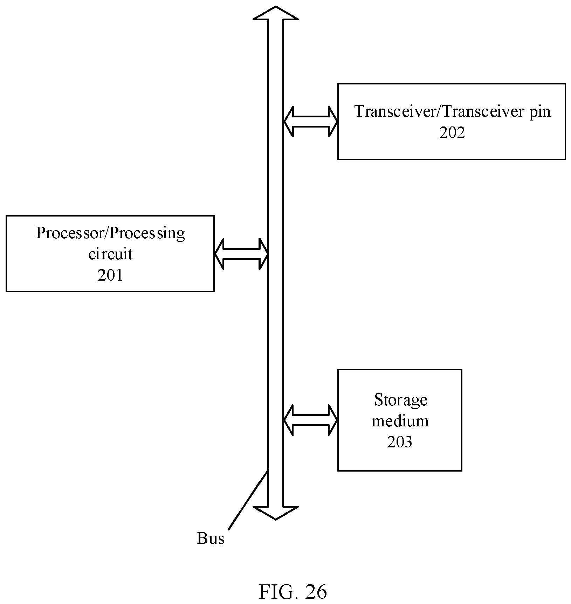

FIG. 26 is a diagram of a structure of a possible product form of a communication apparatus according to an embodiment of this application.

In a possible product form, the communication apparatus in this embodiment of this application may be the foregoing first device. The first device includes a processor 201 and a transceiver 202. Optionally, the communication device further includes a storage medium 203.

The processor 201 is configured to perform the step S101 in FIG. 12 and/or the step S401 in FIG. 17. The transceiver 202 is configured to perform the step S102 in FIG. 12, the step S202 in FIG. 13, the step S302 in FIG. 14, the step S402 in FIG. 17, the step S502 in FIG. 18, the step S602 in FIG. 19, and/or the step S702 in FIG. 20.

In another possible product form, the communication apparatus in this embodiment of this application may be the foregoing second device. The second device includes a processor 201 and a transceiver 202. Optionally, the communication device further includes a storage medium 203.

The processor 201 is configured to perform the step S103 in FIG. 12, the step S201 in FIG. 13, the step S403 in FIG. 17, the step S501 in FIG. 18, and/or the step S701 in FIG. 20. The transceiver 202 is configured to perform the step S102 in FIG. 12, the step S202 in FIG. 13, the step S301 in FIG. 14, the step S402 in FIG. 17, the step S502 in FIG. 18, the step S601 in FIG. 19, and/or the step S702 in FIG. 20.

In another possible product form, the communication apparatus in this embodiment of this application may be implemented by a chip. The chip includes a processing circuit 201 and a transceiver pin 202. Optionally, the chip may further include a storage medium 203.

In another possible product form, the communication apparatus in this embodiment of this application may alternatively be implemented by using the following circuit or component: one or more field programmable gate arrays (field programmable gate arrays, FPGAs), a programmable logic device (programmable logic device, PLD), a controller, a state machine, gate logic, a discrete hardware component, any other suitable circuits, or any combination of circuits that can perform various functions described in this application.

Optionally, an embodiment of this application further provides a computer-readable storage medium. The computer-readable storage medium stores computer instructions. When the computer instructions are run on a computer, the computer is enabled to perform the communication method in the foregoing method embodiments.

Optionally, an embodiment of this application further provides a computer program product including computer instructions. When the computer instructions are run on a computer, the computer is enabled to perform the communication method in the foregoing method embodiments.

It should be understood that the computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

The foregoing descriptions about implementations allow a person skilled in the art to understand that, for the purpose of convenient and brief description, division into the foregoing functional modules is used as an example for illustration. In actual application, the foregoing functions may be allocated to different functional modules for implementation based on a requirement, that is, an inner structure of an apparatus is divided into different functional modules to implement all or some of the functions described above.

It should be understood that the apparatus and method disclosed in the several embodiments provided in this application may be implemented in other manners. For example, the described apparatus embodiments are merely examples. For example, division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
generating, by a first device, a first frame, wherein the first frame comprises a first field and a second field, the first field indicates a duration of a first time resource, the second field is used to determine a purpose of the first time resource, and the purpose of the first time resource comprises: the first time resource is used to transmit a single-user physical layer protocol data unit PPDU, or the first time resource is used to perform frame exchange; and
sending, by the first device, the first frame to a second device.

2. The method according to claim 1, wherein when the first time resource is used to transmit the single-user PPDU, a duration of the single-user PPDU is equal to the duration of the first time resource.

3. The method according to claim 1 or 2, wherein that the second field is used to determine the purpose of the first time resource comprises the following cases:
when the second field is set to a first preset value, the second field is used to determine that the first time resource is used to transmit the single-user PPDU; or
when the second field is set to a second preset value, the second field is used to determine that the first time resource is used to perform frame exchange.

4. The method according to claim 1 or 2, wherein that the second field is used to determine the purpose of the first time resource comprises the following cases:
when the second field is set to a first preset value, the second field is used to determine that the first time resource is used to transmit the single-user PPDU; or
when the second field is set to a second preset value, the second field is used to determine that the first time resource is used by a cooperation device to perform frame exchange, and the cooperation device and the first device do not belong to a same basic service set; or
when the second field is set to a third preset value, the third field is used to determine that the first time resource is used by a peer-to-peer station to perform frame exchange.

5. The method according to any one of claims 1 to 4, wherein the first frame further comprises a trigger type field, and a value of the trigger type field is any one of 8 to 15.

6. The method according to any one of claims 1 to 4, wherein the first frame is a basic basic trigger frame, and a B63 bit in the basic trigger frame is set to 1.

7. The method according to claim 5 or 6, wherein the first field and the second field are located in a common information field or a user information field of the first frame.

8. The method according to any one of claims 1 to 4, wherein the first frame further comprises an A-control control field, the A-control field comprises a control identifier field and a control information field, a value of the control identifier field is any one of 7 to 14, and the first field and the second field are located in the control information field.

9. The method according to any one of claims 1 to 4, wherein the first frame further comprises a triggered response scheduling TRS A-control control field, and the A-control field comprises a TRS control field, the TRS control field comprises the first field and the second field, and a reserved bit in the TRS control field is set to 1.

10. The method according to any one of claims 1 to 9, wherein the method further comprises:
receiving, by the first device, a response frame sent by the second device, wherein the response frame comprises a third field, and the third field indicates whether the second device accepts the first time resource.

11. The method according to any one of claims 1 to 9, wherein the method further comprises:
receiving, by the first device, a first radio frame sent by the second device on the first time resource, wherein a modulation and coding scheme MCS used to send the radio frame is less than or equal to a maximum MCS supported by the first device.

12. The method according to any one of claims 1 to 11, wherein the method further comprises:
receiving, by the first device, buffer status information sent by the second device, wherein the buffer status information indicates a buffer data amount.

13. The method according to claim 12, wherein when the second device is a cooperation device, the buffer data amount comprises one or more of the following: a total uplink buffer data amount, a total downlink buffer data amount, or a sum of the total uplink buffer data amount and the total downlink buffer data amount; and the total uplink buffer data amount is a sum of uplink buffer data amounts of one or more stations associated with the second device, and the total downlink buffer data amount is a sum of downlink buffer data amounts of the one or more stations associated with the second device.

14. The method according to claim 12, wherein when the second device is a peer-to-peer station, the buffer data amount is a sum of buffer data amounts on one or more P2P links established by the second device.

15. A communication method, wherein the method comprises:
receiving, by a second device, a first frame sent by a first device, wherein the first frame comprises a first field and a second field, the first field indicates a duration of a first time resource, the second field is used to determine a purpose of the first time resource, and the purpose of the first time resource comprises: the first time resource is used to transmit a single-user physical layer protocol data unit PPDU, or the first time resource is used to perform frame exchange; and
parsing, by the second device, the first frame.

16. The method according to claim 15, wherein when the first time resource is used to transmit the single-user PPDU, a duration of the single-user PPDU is equal to the duration of the first time resource.

17. The method according to claim 15 or 16, wherein that the second field is used to determine the purpose of the first time resource comprises the following cases:
when the second field is set to a first preset value, the second field is used to determine that the first time resource is used to transmit the single-user PPDU; or
when the second field is set to a second preset value, the second field is used to determine that the first time resource is used to perform frame exchange.

18. The method according to claim 15 or 16, wherein that the second field is used to determine the purpose of the first time resource comprises the following cases:
when the second field is set to a first preset value, the second field is used to determine that the first time resource is used to transmit the single-user PPDU; or
when the second field is set to a second preset value, the second field is used to determine that the first time resource is used by a cooperation device to perform frame exchange, and the cooperation device and the first device do not belong to a same basic service set; or
when the second field is set to a third preset value, the third field is used to determine that the first time resource is used by a peer-to-peer station to perform frame exchange.

19. The method according to any one of claims 15 to 18, wherein the first frame further comprises a trigger type field, and a value of the trigger type field is any one of 8 to 15.

20. The method according to any one of claims 15 to 18, wherein the first frame is a basic basic trigger frame, and a B63 bit in the basic trigger frame is set to 1.

21. The method according to claim 19 or 20, wherein the first field and the second field are located in a common information field or a user information field of the first frame.

22. The method according to any one of claims 15 to 18, wherein the first frame further comprises an A-control control field, the A-control field comprises a control identifier field and a control information field, a value of the control identifier field is any one of 7 to 14, and the first field and the second field are located in the control information field.

23. The method according to any one of claims 15 to 18, wherein the first frame further comprises a triggered response scheduling TRS A-control control field, and the A-control field comprises a TRS control field, the TRS control field comprises the first field and the second field, and a reserved bit in the TRS control field is set to 1.

24. The method according to any one of claims 15 to 23, wherein the method further comprises:
sending, by the second device, a response frame to the first device, wherein the response frame comprises a third field, and the third field indicates whether the second device accepts the first time resource.

25. The method according to any one of claims 15 to 23, wherein the method further comprises:
sending, by the second device, a first radio frame on the first time resource, wherein an MCS used to send the radio frame is less than or equal to a maximum MCS supported by the first device.

26. The method according to any one of claims 15 to 25, wherein the method further comprises:
sending, by the second device, buffer status information to the first device, wherein the buffer status information indicates a buffer data amount.

27. The method according to claim 26, wherein when the second device is a cooperation device, the buffer data amount comprises one or more of the following: a total uplink buffer data amount, a total downlink buffer data amount, or a sum of the total uplink buffer data amount and the total downlink buffer data amount; and the total uplink buffer data amount is a sum of uplink buffer data amounts of one or more stations associated with the second device, and the total downlink buffer data amount is a sum of downlink buffer data amounts of the one or more stations associated with the second device.

28. The method according to claim 26, wherein when the second device is a peer-to-peer station, the buffer data amount is a sum of buffer data amounts on one or more P2P links established by the second device.

29. A communication apparatus, wherein the communication apparatus comprises units configured to perform steps in the method according to any one of claims 1 to 28.

30. A computer-readable storage medium, wherein the computer-readable storage medium stores computer instructions, and when the computer instructions are run on a computer, the computer is enabled to perform the method according to any one of claims 1 to 28.

31. A chip, wherein the chip comprises a processing unit and a transceiver pin, wherein the processing unit is configured to perform a processing operation in the method according to any one of claims 1 to 28, and the transceiver pin is configured to perform a communication operation in the method according to any one of claims 1 to 28.
